(19) Europäisches Patentamt
European Patent Office
Office européen des brevets

(11) **EP 3 965 399 B1**

(12) **EUROPEAN PATENT SPECIFICATION**

(45) Date of publication and mention
of the grant of the patent:
**11.01.2023  Bulletin 2023/02**

(21) Application number: **20867314.5**

(22) Date of filing: **12.06.2020**

(51) International Patent Classification (IPC):
**B60L 53/31** (2019.01)    **G05B 19/042** (2006.01)

(52) Cooperative Patent Classification (CPC):
**G05B 19/0423; B60L 53/31; B60L 53/60;**
G05B 2219/1113; G05B 2219/1122;
G05B 2219/25096; Y02T 10/70; Y02T 10/7072;
Y02T 90/12

(86) International application number:
**PCT/CN2020/095953**

(87) International publication number:
**WO 2021/057105 (01.04.2021 Gazette 2021/13)**

(54) **ELECTRONIC DEVICE AND HARDWARE ADDRESS CONFIGURATION METHOD**

ELEKTRONISCHE VORRICHTUNG UND VERFAHREN ZUR KONFIGURATION EINER
HARDWARE-ADRESSE

DISPOSITIF ÉLECTRONIQUE ET PROCÉDÉ DE CONFIGURATION D'ADRESSE MATÉRIELLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **23.09.2019  CN 201910900517**

(43) Date of publication of application:
**09.03.2022  Bulletin 2022/10**

(73) Proprietor: **Huawei Digital Power Technologies
Co., Ltd.
Shenzhen, Guangdong 518043 (CN)**

(72) Inventors:
• **ZENG, Tao**
**Shenzhen, Guangdong 518129 (CN)**
• **WANG, Shaohua**
**Shenzhen, Guangdong 518129 (CN)**
• **GE, Jing**
**Shenzhen, Guangdong 518129 (CN)**

(74) Representative: **Isarpatent
Patent- und Rechtsanwälte Barth
Charles Hassa Peckmann & Partner mbB
Friedrichstrasse 31
80801 München (DE)**

(56) References cited:
EP-B1- 0 692 753        CN-A- 106 850 844
CN-A- 107 128 195        CN-A- 108 989 478
CN-A- 110 758 151        US-A1- 2009 021 221
US-A1- 2014 336 821      US-B1- 6 427 807

• **Zhang Jun ,Han Huachun ,Yuan Zengquan:
"Smart Charging Control Electrical Vehicles
Based on Two-level Charge Management
System", Electric Power Engineering
Technology, vol. 36, no. 5, 28 September 2017
(2017-09-28), pages 86-92, XP055796603, ISSN:
2096-3203, DOI:
10.19464/j.cnki.cn32-1541/tm.2017.05.015**

**Description**

**CROSS-REFERENCE TO RELATED APPLICATIONS**

Priority is claimed to Chinese Patent Application No. 201910900517.9, filed with the China National Intellectual Property Administration on September 23, 2019 and entitled "ELECTRONIC DEVICE AND HARDWARE ADDRESS CONFIGURATION METHOD".

**TECHNICAL FIELD**

This disclosure relates to the field of electronic science and technologies, and the invention relates to electronic devices and hardware address configuration methods.

**BACKGROUND**

US 6 427 807 B1 concerns a method of configuring elevator controls which permits rapid and error-free assignment of input and output signals of a control processor to freely selectable connection points of external signal emitters and signal receivers, such as limit switches, sensors, display devices, alarm signals, etc., without requiring special knowledge of controls, without wiring modifications having to be made, and without the control processor having to be reprogrammed on site. A flow of information between connection configuration modules arranged on an input/output module and a control processor takes place via a suitable bus system. The bus system forms a simple communication connection between a large and variable number of configuration modules and the control processor, wherein it is possible for the latter also to be part of a decentralized elevator control system subordinated to a main processor. Each configuration module has programmed into it a bus address that is unambiguous and unique for every function of a signal emitter or signal receiver represented by the module.

Furthermore, with development of an electronic market, most electronic devices have multi-output functions. Generally, an electronic device has a plurality of output circuits, and different output circuits may have a same output path or different output paths and can output signals to the same output path or different output paths.

A control circuit in a current electronic device may control a plurality of output circuits by using one communications bus, and unique hardware addresses are respectively configured in the plurality of output circuits, so that the control circuit can independently control each output circuit. Usually, there are a plurality of forms of configuration rules for configuring a hardware address for an output circuit. However, in most configuration rules, a hardware address configured for any output circuit needs to have a specific correspondence with an output path of the output circuit.

Currently, most hardware addresses of output circuits are manually configured. For example, a hardware address has K bits in total, K DIP switches are disposed on a front panel of an output circuit, and the K DIP switches are in a one-to-one correspondence with the K bits of the hardware address. When installing the output circuit, an operator first determines the hardware address of the output circuit according to a hardware address configuration rule and based on an output path corresponding to the output circuit, and then separately switches on or switches off the K DIP switches, so that on/off statuses of the K DIP switches can represent the K-bit hardware address. For example, the first DIP switch corresponds to the first bit of the hardware address. When the first DIP switch is switched on, it indicates that a value of the first bit of the hardware address is "1"; or when the first DIP switch is switched off, it indicates that a value of the first bit of the hardware address is "0". After the output circuit is powered on, the output circuit may read the on or off states of the K DIP switches on the front panel, to obtain and store the hardware address of the output circuit.

However, an implementation of manually configuring a hardware address is cumbersome, has a high skill requirements for a maintenance person, and is prone to an operation error.

**SUMMARY**

The object of the present invention is to provide electronic devices and hardware address configuration methods so as to configure a hardware address for each output circuit to reduce maintenance costs and also improve reliability of the electronic devices, and to further reduce costs of the electronic devices. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect according to the invention, the invention provides an electronic device. The electronic device may be a multi-output device such as an electric vehicle charging pile, and specifically, may be a charging pile of a fixed connection structure. The electronic device mainly includes: a control circuit, N output circuits, and M output conducting wires, where both M and N are integers greater than 1. Any one of the N output circuits is a first output circuit, an output terminal of the first output circuit is coupled to a first output conducting wire in the M output conducting wires, and the first output circuit is configured to send an output signal to the first output conducting wire. Control terminals of the N output circuits are connected in parallel and are coupled to the control circuit. The control circuit includes M detection ports, and the M detection ports are respectively coupled to the M output conducting wires. The control circuit is configured to: enable the first output circuit; after any one of the M detection ports receives an output signal sent by the first output circuit, determine that an output conducting wire coupled to the any detection port (that is, a detection port that receives the output signal) is the first output conducting wire corresponding to the first output circuit; configure a hardware address corresponding to the first output conducting wire for the first output circuit according to a configuration rule; and send configuration information to the first output circuit, where the configuration information is used to indicate the hardware address of the first output circuit. The first output circuit is further configured to obtain and store the hardware address based on the configuration information. In the technical solution, the control circuit determines, by using the detection port that receives the output signal, the first output conducting wire corresponding to the first output circuit; and further may configure the hardware address corresponding to the first output conducting wire for the first output circuit, and then indicate the hardware address to the first output circuit by using the configuration information. In the foregoing process, a process of manually configuring a hardware address for the first output circuit is omitted. This helps reduce maintenance costs, avoids interference caused by a manual operation error, and improves reliability of the electronic device. Furthermore, a DIP switch used to configure a hardware address does not need to be disposed in the output circuit. This further helps reduce overall production costs of the electronic device.

According to the first aspect according to the invention, in a first possible implementation of the first aspect according to the invention, the electronic device further includes a detection circuit, and the detection circuit includes M input terminals and M output terminals that are in a one-to-one correspondence, the M input terminals of the detection circuit are respectively coupled to the M output conducting wires, and the M output terminals of the detection circuit are respectively coupled to the M detection ports of the control circuit; and the detection circuit may receive the output signal of the first output circuit by using a first input terminal coupled to the first output conducting wire, perform voltage division processing on the received output signal, and provide an output signal obtained after the voltage division processing to the control circuit by using a first output terminal corresponding to the first input terminal. In the technical solution, a voltage value of the output signal decreases after the voltage division performed by the detection circuit. This helps protect the control circuit from high voltage damage.

According to the first aspect according to the invention or the first possible implementation of the first aspect according to the invention, in a second possible implementation of the first aspect, the control circuit may further determine, according to the configuration rule, one or more target hardware addresses corresponding to a to-be-adjusted target output conducting wire; and send a first control instruction to the N output circuits, where the first control instruction includes control information and the one or more target hardware addresses; and the first output circuit is further configured to: receive the first control instruction; and if the one or more target hardware addresses include the stored hardware address, execute the control information. The technical solution reduces a quantity of output modules for which hardware addresses need to be configured, and helps reduce a computing resource of the control circuit.

According to any one of the first aspect according to the invention or the first and the second possible implementations of the first aspect according to the invention, in a third possible implementation of the first aspect, the first output circuit may further send identification information of the first output circuit to the control circuit; and the control circuit is specifically configured to send a second control instruction to the N output circuits, where the second control instruction includes the identification information of the first output circuit, and the second control instruction is used to enable the first output circuit. The identification information is unique, that is, one piece of identification information may indicate a unique output circuit. For example, the identification information may be a production sequence number of the output circuit. In this embodiment of this application, the control circuit may enable the first output circuit by using the identification information.

According to any one of the first aspect according to the invention or the first to the third possible implementations of the first aspect according to the invention, in a fourth possible implementation of the first aspect, before sending the second control instruction to the N output circuits, the control circuit may further determine that stored identification information does not include the identification information of the first output circuit; and store the identification information of the first output circuit. It may also be understood that, after determining that the stored identification information does not include the identification information of the first output circuit, the control circuit sends the second control instruction, and stores the identification information of the first output circuit. If the identification information stored in the control circuit does not include the identification information of the first output circuit, it indicates that the control circuit has not configured a hardware address for the first output circuit. In this case, the control circuit sends the second control instruction to execute a subsequent hardware address configuration process. In addition, the control circuit may further store the identification information of the first output circuit. Therefore, after being powered on next time, the control circuit may not repeatedly configure a hardware address for the first output circuit, to reduce running pressure of the control circuit.

According to any one of the first aspect according to the invention or the first to the fourth possible implementations of the first aspect according to the invention, in a fifth possible implementation of the first aspect, the configuration rule includes correspondences between the M output conducting wires and M hardware address ranges, and the M hardware address ranges do not overlap each other in a possible implementation; and the control circuit is specifically configured to: obtain a hardware address range corresponding to the first output conducting wire; and determine, from unallocated hardware addresses in the hardware address range, the hardware address configured for the first output circuit.

According to any one of the first aspect according to the invention or the first to the fifth possible implementations of the first aspect according to the invention, in a sixth possible implementation of the first aspect, the electronic device may be a charging pile, the electronic device further includes an input conducting wire, and input terminals of the N output circuits are coupled to the input conducting wire; the input conducting wire is configured to be coupled to an alternating current power supply; and may receive an alternating current provided by the alternating current power supply, and provide the received alternating current to the N output circuits; and the first output circuit is specifically configured to: convert the alternating current received from the input conducting wire into a direct current, and output an output signal in a form of a direct current to the corresponding first output conducting wire.

According to a second aspect according to the invention, the invention provides an electronic device. The electronic device may be a multi-output device such as an electric vehicle charging pile, and specifically, may be a charging pile of a flexible connection structure. The electronic device mainly includes: a control circuit, N output circuits, N switch circuits, M output conducting wires, where both N and M are integers greater than 1. Output terminals of the N output circuits are respectively coupled to input terminals of the N switch circuits in a one-to-one correspondence, and control terminals of the N output circuits are connected in parallel and are coupled to the control circuit. Any one of the N output circuits is a first output circuit, an output terminal of the first output circuit is coupled to an input terminal of a first switch circuit, and output terminals of the first switch circuit are coupled to the M output conducting wires. The control circuit is coupled to a detected conducting wire in the M output conducting wires. The first output circuit is configured to send an output signal to the first switch circuit. The first switch circuit is configured to conduct a transmission path to any one of the M output conducting wires under control of the control circuit. The control circuit is configured to: enable the first output circuit; sequentially control the N switch circuits to conduct transmission paths to the detected conducting wire; if receiving the output signal of the first output circuit from the detected conducting wire after controlling any switch circuit to conduct a transmission path to the detected conducting wire, determine that the any switch circuit (that is, the last switch circuit that is enabled before the output signal of the first output circuit is received) is the first switch circuit; configure a hardware address corresponding to the first switch circuit for the first output circuit according to a configuration rule; and send configuration information to the first output circuit, where the configuration information is used to indicate the hardware address of the first output circuit. The first output circuit is further configured to obtain and store the hardware address based on the configuration information. In the technical solution, the control circuit determines, by using the detected conducting wire, that the last switch circuit that is enabled before the output signal is received is the first switch circuit corresponding to the first output circuit; and further may configure the hardware address corresponding to the first switch circuit for the first output circuit, and then may indicate the hardware address to the first output circuit by using the configuration information. In the foregoing process, a process of manually configuring a hardware address for the first output circuit is omitted. This helps reduce maintenance costs, avoids interference caused by a manual operation error, and improves reliability of the electronic device. Furthermore, a DIP switch used to configure a hardware address does not need to be disposed in the output circuit. This further helps reduce overall production costs of the electronic device.

According to the second aspect according to the invention, in a first possible implementation of the second aspect according to the invention, the electronic device further includes a detection circuit, an input terminal of the detection circuit is coupled to the detected conducting wire, and an output terminal of the detection circuit is coupled to the control circuit; and the detection circuit may receive the output signal of the first output circuit, perform voltage division processing on the output signal, and provide an output signal obtained after the voltage division processing to the control circuit.

According to the second aspect according to the invention or the first possible implementation of the second aspect according to the invention, in a second possible implementation of the second aspect, the control circuit may further determine one or more target switch circuits of a to-be-adjusted target output conducting wire; determine, according to the configuration rule, one or more hardware addresses respectively corresponding to the one or more target switch circuits; and send a third control instruction to the N output circuits, where the third control instruction includes control information and the one or more hardware addresses; and/or send a fourth control instruction to the one or more target switch circuits, where the fourth control instruction is used to instruct the target switch circuit to disconnect or conduct a transmission path of an output signal to the to-be-adjusted target output conducting wire; and the first output circuit may further receive the third control instruction; and if the one or more hardware addresses include the stored hardware address, execute the control information.

According to any one of the second aspect according to the invention or the first and the second possible implementations of the second aspect according to the invention, in a third possible implementation of the second aspect, the first output circuit may further send identification information of the first output circuit to the control circuit; and the control circuit is specifically configured to send a second control instruction to the N output circuits, where the second control instruction includes the identification information of the first output circuit, and the second control instruction is used to enable the first output circuit.

According to any one of the second aspect according to the invention or the first to the third possible implementations of the second aspect according to the invention, in a fourth possible implementation of the second aspect, before sending the second control instruction to the N output circuits, the control circuit may further determine that stored identification information does not include the identification information of the first output circuit; and store the identification information of the first output circuit.

According to any one of the second aspect according to the invention or the first to the fourth possible implementations of the second aspect according to the invention, in a fifth possible implementation of the second aspect, the configuration rule includes that the hardware address of the first output circuit is identification information of the first switch circuit.

According to any one of the second aspect or the first to the fifth possible implementations of the second aspect according to the invention, in a sixth possible implementation of the second aspect, the electronic device is a charging pile, the electronic device further includes an input conducting wire, and input terminals of the N output circuits are coupled to the input conducting wire; the input conducting wire is configured to: be coupled to an alternating current power supply; and receive an alternating current provided by the alternating current power supply, and provide the alternating current to the N output circuits; and the first output circuit is specifically configured to: convert the alternating current received from the input conducting wire into a direct current, and output an output signal in a form of a direct current to the corresponding first switch circuit.

According to a third aspect according to the invention, the invention provides a hardware address configuration method. The method may be applied to the control circuit in the electronic device provided in any one of the first aspect or the possible implementations of the first aspect. The method mainly includes: enabling a first output circuit, where the first output circuit is any one of N output circuits, an output terminal of the first output circuit is coupled to a first output conducting wire in M output conducting wires, and both M and N are integers greater than 1; after receiving an output signal of the first output circuit, determining that an output conducting wire that transmits the output signal is the first output conducting wire; configuring a hardware address corresponding to the first output conducting wire for the first output circuit according to a configuration rule; and sending configuration information to the first output circuit, where the configuration information is used to indicate the hardware address of the first output circuit.

According to the third aspect according to the invention, in a first possible implementation of the third aspect according to the invention, after the sending configuration information to the first output circuit, the method further includes: determining, according to the configuration rule, one or more target hardware addresses corresponding to a to-be-adjusted target output conducting wire; and sending a first control instruction to the N output circuits, where the first control instruction includes control information and the one or more target hardware addresses, and the first control instruction may instruct one or more output circuits respectively corresponding to the one or more target hardware addresses to execute the control information.

According to the third aspect according to the invention or the first possible implementation of the third aspect, in a second possible implementation of the third aspect according to the invention, the enabling a first output circuit includes: sending a second control instruction to the N output circuits, where the second control instruction includes identification information of the first output circuit, and the second control instruction is used to enable the first output circuit.

According to any one of the third aspect according to the invention or the first and the second possible implementations of the third aspect according to the invention, in a third possible implementation of the third aspect, before the enabling a first output circuit, the method further includes: determining that stored identification information does not include the identification information of the first output circuit; and storing the identification information of the first output circuit.

According to any one of the third aspect according to the invention or the first to the third possible implementations of the third aspect according to the invention, in a fourth possible implementation of the third aspect, the configuration rule includes correspondences between the M output conducting wires and M hardware address ranges, and the M hardware address ranges do not overlap each other; and the configuring a hardware address corresponding to the first output conducting wire for the first output circuit according to a configuration rule includes: obtaining a hardware address range corresponding to the first output conducting wire; and determining, from unallocated hardware addresses in the hardware address range, the hardware address configured for the first output circuit.

According to a fourth aspect according to the invention, the invention also provides a hardware address configuration method. The method may be applied to the control circuit in the electronic device provided in any one of the second aspect or the possible implementations of the second aspect. The method mainly includes: enabling a first output circuit, where the first output circuit is any one of N output circuits, output terminals of the N output circuits are respectively coupled to input terminals of N switch circuits in a one-to-one correspondence, output terminals of a first switch circuit are coupled to M output conducting wires, and both M and N are integers greater than 1; sequentially controlling the N switch circuits to conduct transmission paths to a detected conducting wire in the M output conducting wires; if receiving an output signal of the first output circuit from the detected conducting wire after controlling any switch circuit to conduct a transmission path to the detected conducting wire, determining that the any switch circuit is the first switch circuit; configuring a hardware address corresponding to the first switch circuit for the first output circuit according to a configuration rule; and sending configuration information to the first output circuit, where the configuration information is used to indicate the hardware address of the first output circuit.

According to the fourth aspect according to the invention, in a first possible implementation of the fourth aspect according to the invention, after the sending configuration information to the first output circuit, the method further includes: determining one or more target switch circuits of a to-be-adjusted target output conducting wire; determining, according to the configuration rule, one or more hardware addresses respectively corresponding to the one or more target switch circuits; and sending a third control instruction to the N output circuits, where the third control instruction includes control information and the one or more hardware addresses, and the third control instruction may instruct one or more output circuits respectively corresponding to the one or more hardware addresses to execute the control information; and/or sending a fourth control instruction to the one or more target switch circuits, where the fourth control instruction is used to instruct the target switch circuit to disconnect or conduct a transmission path of an output signal to the to-be-adjusted target output conducting wire.

According to the fourth aspect according to the invention or the first possible implementation of the fourth aspect according to the invention, in a second possible implementation of the fourth aspect, the enabling a first output circuit includes: sending a second control instruction to the N output circuits, where the second control instruction includes identification information of the first output circuit, and the second control instruction is used to enable the first output circuit.

According to any one of the fourth aspect according to the invention or the first and the second possible implementations of the fourth aspect according to the invention, in a third possible implementation of the fourth aspect, before the sending a second control instruction to the N output circuits, the method further includes: determining that stored identification information does not include the identification information of the first output circuit; and storing the identification information of the first output circuit.

According to any one of the fourth aspect according to the invention or the first to the third possible implementations of the fourth aspect according to the invention, in a fourth possible implementation of the fourth aspect, the configuration rule includes that the hardware address of the first output circuit is identification information of the first switch circuit.

The technical solutions of this disclosure are made clearer and more comprehensible in the following description of the embodiments and examples.

## BRIEF DESCRIPTION OF DRAWINGS

FIG. 1 is a schematic structural diagram of a multi-output electronic device;
FIG. 2 is a schematic diagram of a front panel of an output circuit;
FIG. 3 is a schematic flowchart of a hardware address configuration method according to an embodiment of this application;
FIG. 4 is a schematic structural diagram of a detection circuit according to an embodiment of this application;
FIG. 5 is a schematic flowchart of a hardware address configuration method according to an embodiment of this application;
FIG. 6 is a schematic structural diagram of a multi-output electronic device;
FIG. 7 is a schematic flowchart of a hardware address configuration method according to an embodiment of this application;
FIG. 8 is a schematic diagram of a connection relationship between an output circuit, a switch circuit, and a detected conducting wire according to an embodiment of this application; and
FIG. 9 is a schematic flowchart of a hardware address configuration method according to an embodiment of this application.

## DESCRIPTION OF EMBODIMENTS

To make the objectives, technical solutions, and advantages of this application clearer, the following further describes this application in detail with reference to the accompanying drawings.

Multi-output is a common function of an electronic device, and the electronic device can simultaneously output a plurality of signals from a plurality of output ports. For example, devices such as a multi-connector electric vehicle charging pile that can simultaneously charge a plurality of electric vehicles and a multi-plug charger that can simultaneously charge a plurality of terminals can implement multi-output. It should be noted that in the embodiments of this application, the signal may be an electrical signal, for example, the signal may be a current or a voltage. Alternatively, the signal may be a communication signal used to transmit information, or may be a charging signal used to provide electric energy. This is not limited in the embodiments of this application.

A specific operation method in the following embodiment may also be applied to an apparatus embodiment or a system embodiment. It should be noted that in the description of this application, "at least one" means one or more, and "a plurality of" means two or more. In view of this, in the embodiments of the present invention, "a plurality of" may also be understood as "at least two". The term "and/or" describes an association relationship between associated objects and represents that three relationships may exist. For example, A and/or B may represent the following three cases: Only A exists, both A and B exist, and only B exists. In addition, the character "/" generally indicates an "or" relationship between associated objects unless otherwise specified. In addition, it should be understood that, words such as "first" and "second" in the description of this application are used only for description purposes and should not be understood as an indication or implication of relative significance or as an indication or implication of an order.

It should be noted that "coupling" in this application indicates an energy transmission relationship, and specifically, may indicate an electric energy transmission relationship. For example, "A is coupled to B" indicates that electric energy may be transmitted between A and B. It may also be understood that a charge may be transmitted between A and B. In terms of an electrical connection relationship, "A is coupled to B" may indicate that A is directly electrically connected to B, or may indicate that A is indirectly electrically connected to B by using another conductor or electronic component, so that electric energy can be transmitted between A and B.

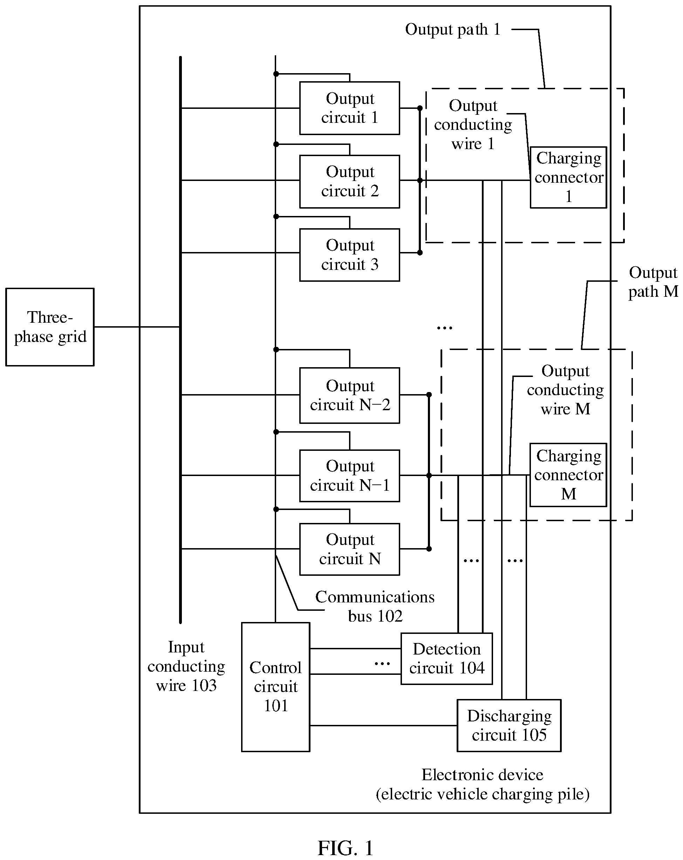

FIG. 1 is an example schematic structural diagram of an electronic device that can implement multi-output. As shown in FIG. 1, the electronic device mainly includes a control circuit 101, N output circuits (an output circuit 1, an output circuit 2, ..., and an output circuit N), and M output conducting wires (an output conducting wire 1, ..., and an output conducting wire M), where N and M are integers greater than 1.

In FIG. 1, each output circuit can output a signal. Specifically, the output circuit may include an internal power supply, the internal power supply may be configured to provide electrical energy to the output circuit, and the output circuit may further process the electrical energy provided by the internal power supply, to output a signal. Alternatively, the output circuit may be coupled to an external power supply outside the electronic device, and receive electrical energy provided by the external power supply; and may further process the electrical energy provided by the external power supply, to output a signal. It should be noted that a specific implementation of the output circuit is related to a type and a function of the electronic device. This is not limited in this embodiment of this application.

For example, the electronic device shown in FIG. 1 may be a multi-connector electric vehicle charging pile. The electric vehicle charging pile further includes an input conducting wire 103, and input terminals of the N output circuits may be connected in parallel by using the input conducting wire 103. The input conducting wire 103 may also be referred to as an alternating current input bus. The input conducting wire 103 is further coupled to an alternating current power supply outside the electric vehicle charging pile, and may receive an alternating current provided by the alternating current power supply. Optionally, each output circuit of the electric vehicle charging pile may include an alternating current to direct current converter, so that each output circuit can convert an alternating current received by using the input conducting wire 103 into a direct current, and therefore can output an output signal in a form of a direct current. A signal output by the electric vehicle charging pile may also be referred to as a charging current (charging voltage).

The output conducting wire may also be referred to as a direct current output bus. As shown in FIG. 1, there is a one-to-many correspondence between the output conducting wires 1 to M and the output circuits 1 to N, that is, each of the M output conducting wires is coupled to output terminals of one or more of the N output circuits, and an output terminal of each of the N output circuits is coupled to only one of the M output conducting wires. Each of the N output circuits may separately output a signal to an output conducting wire coupled to the output circuit.

Each of the M output conducting wires may receive output signals of one or more output circuits coupled to the output conducting wire, and output a received total output signal from the electronic device. The total output signal may include output signals of one or more output circuits coupled to the output conducting wire. When the one or more output circuits simultaneously perform output, the total output signal may be alternatively a mixed signal including the output signals of the one or more output circuits. For example, in FIG. 1, a total output signal transmitted by the output conducting wire 1 is actually a mixed current of charging currents output by one or more of the output circuit 1, the output circuit 2, and an output circuit 3.

For example, when only the output circuit 1 outputs a charging current, and the output circuit 2 and the output circuit 3 do not output charging currents, the total output signal includes only the charging current output by the output circuit 1; when the output circuit 1 and the output circuit 2 simultaneously output charging currents, and the output circuit 3 does not output a charging current, the total output signal includes a mixed current including a charging current of the output circuit 1 and a charging current of the output circuit 2; or when the output circuit 1, the output circuit 2, and the output circuit 3 simultaneously output charging currents, the total output signal includes a mixed current including a charging current of the output circuit 1, a charging current of the output circuit 2, and a charging current of the output circuit 3.

In a possible implementation, as shown in FIG. 1, each of the M output conducting wires may further correspond to one output path, the output conducting wire may transmit the total output signal to the corresponding output path, and the output path may further process the received total output signal. For example, in FIG. 1, the output conducting wire 1 corresponds to an output path 1, and the output path 1 may include functional components such as an amplifier and a filter, so that the output path 1 may perform processing such as amplification and filtering on an output signal transmitted by the output conducting wire 1, and then output a processed output signal from the electronic device. It may be understood that for electronic devices of different types and/or different functions, the output path has a plurality of possible specific implementations. This is not limited in this embodiment of this application.

The electric vehicle charging pile is used as an example. As shown in FIG. 1, each output path may further include a charging connector. The electric vehicle charging pile shown in FIG. 1 is an M-connector electric vehicle charging pile, and can simultaneously charge a maximum of M electric vehicles. A charging connector 1 is used as an example. When charging an electric vehicle, an operator may insert the charging connector 1 into a charging port of the to-be-charged electric vehicle, and a total output signal (charging current) transmitted by the output conducting wire 1 is output to the electric vehicle by using the charging connector 1, to provide a charging current to the electric vehicle.

As shown in FIG. 1, a plurality of output circuits are usually installed in the multi-output electronic device, a control terminal of each output circuit is coupled to the control circuit 101, and the control circuit 101 may separately control working statuses of the output circuits. Generally, the control circuit 101 may be a processor chip in which an executable program is installed. In a working process of the electronic device, the control circuit 101 may run the executable program in the electronic device, to generate a control instruction, and control the working statuses of the output circuits in the electronic device by using the control instruction. For example, the control circuit 101 may control a working status of the output circuit A. It may also be understood that the control circuit 101 may control enabling or disabling of the output circuit A. The control circuit 101 may further control output power, an output current value, an output voltage value, or the like of the output circuit A. This is not limited in this embodiment of this application.

In a possible implementation, to reduce occupied ports of the control circuit 101, control terminals of the output circuits 1 to N are connected in parallel and are coupled to the control circuit 101 by using a communications bus 102. In this case, only a port coupled to the communications bus 102 in the control circuit 101 is occupied to control the output circuits 1 to N. This greatly reduces a quantity of occupied ports of the control circuit 101. The communications bus 102 may be a peripheral component interconnect (peripheral component interconnect, PCI) bus, an extended industry standard architecture (extended industry standard architecture, EISA) bus, a controller area network (controller area network, CAN), or the like. The communications bus 102 may be classified as an address bus, a data bus, a control bus, or the like. For ease of representation, in this embodiment of this application, only one line is used to represent the communications bus 102, but it does not indicate that there is only one bus or only one type of bus.

In a possible implementation, when the electronic device is in the working process, the control circuit 101 may send a first control instruction to the communications bus 102 to separately control the working statuses of the output circuits, to adjust total output signals transmitted by the output conducting wires. Specifically, a unique hardware address is configured in each of the output circuits 1 to N, that is, any two of the output circuits 1 to N have different hardware addresses. Usually, there is a correspondence between a hardware address of an output circuit and an output conducting wire coupled to the output circuit. FIG. 1 is used as an example. A hardware address of the output circuit 1, a hardware address of the output circuit 2, and a hardware address of the output circuit 3 all correspond to the output conducting wire 1. In this case, a hardware address of each output circuit may represent a coupling relationship between the output circuit and any output conducting wire, and the control circuit 101 may determine, from one or more hardware addresses corresponding to a to-be-adjusted output conducting wire, one or more hardware addresses as target hardware addresses, and adjust output statuses of one or more corresponding output circuits by using the one or more target hardware addresses, to adjust a total output signal of the output conducting wire.

The to-be-adjusted output conducting wire may be a transmission conducting wire whose output power of a total output signal needs to be adjusted, or may be an output conducting wire that enables or disables a total output signal. For example, it is assumed that the control circuit 101 needs to adjust power of the total output signal transmitted by the output conducting wire 1. In this case, the control circuit 101 may determine that a hardware address corresponding to the output conducting wire 1 is a hardware address 1, a hardware address 2, and a hardware address 3. The hardware address 1 is the hardware address of the output circuit 1, the hardware address 2 is the hardware address of the output circuit 2, and the hardware address 3 is the hardware address of the output circuit 3. The control circuit 101 may determine one or more hardware addresses from the hardware address 1, the hardware address 2, and the hardware address 3 as target hardware addresses.

Then, the control circuit 101 may send a first control instruction to the communications bus 102, and the first control instruction may include the one or more target hardware addresses and control information. The communications bus 102 transmits the first control instruction. Because the control terminals of the output circuits 1 to N are connected in parallel, all the output circuits 1 to N can receive the first control instruction. For each of the output circuits 1 to N, the output circuit determines whether the one or more target hardware addresses in the first control instruction include a hardware address of the output circuit. If yes, the output circuit executes the control information in the first control instruction. If no, the output circuit may ignore the first control instruction, that is, the output circuit does not execute the control information in the first control instruction.

For example, it is assumed that the first control instruction includes a target hardware address (the hardware address 1) and control information ("enabling"). For the output circuits 2 to N, because the one or more target hardware addresses in the first control instruction do not include hardware addresses of the output circuits, the output circuits 2 to N may ignore the first control instruction. For the output circuit 1, the one or more target hardware addresses in the first control instruction include the hardware address of the output circuit 1, and therefore the output circuit 1 executes the control information in the first control instruction, that is, the output circuit 1 is enabled to output a signal to the output conducting wire 1.

Generally, the control information may include a plurality of possible types such as enabling, disabling, increasing output power, and decreasing output power. This is not limited in this embodiment of this application. The control circuit 101 may select appropriate control information based on an adjustment requirement. For example, if the power of the total output signal transmitted by the output conducting wire 1 needs to be increased, the control circuit 101 may select control information of the "enabling" type to increase a quantity of output circuits that provide output signals to the output conducting wire 1, to increase the power of the total output signal transmitted by the output conducting wire 1; or the control circuit 101 may select control information of the "increasing output power" type to increase output power of one or more output circuits coupled to the output conducting wire 1, to increase the power of the total output signal transmitted by the output conducting wire 1.

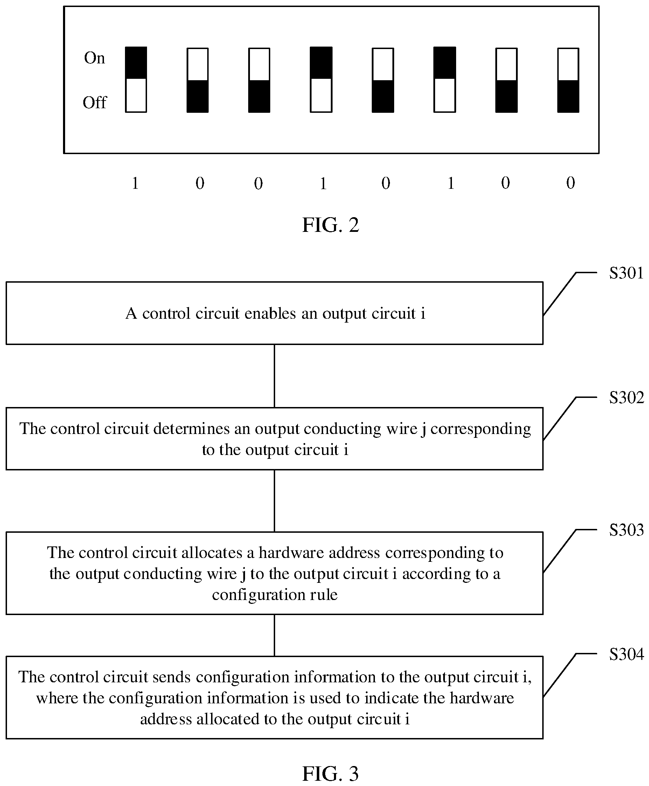

It can be learned from the foregoing process that the control circuit 101 separately controls the output circuits by using the hardware address. Currently, most hardware addresses of output circuits need to be manually configured. The electric vehicle charging pile is used as an example. FIG. 2 shows an example schematic diagram of a front panel of an output circuit. As shown in FIG. 2, eight DIP switches are disposed on the front panel of the output circuit. The eight DIP switches may represent an 8-bit hardware address, and the eight DIP switches are in a one-to-one correspondence with values of 8 bits of the hardware address.

When installing the output circuit, an operator first determines the hardware address of the output circuit according to a hardware address configuration rule and based on an output conducting wire corresponding to the output circuit, and then separately switches on or switches off the eight DIP switches on the front panel, so that on/off statuses of the eight DIP switches can represent the 8-bit hardware address configured for the output circuit. For example, the eight switches in FIG. 2 respectively correspond to the values of the first to the eighth bits of the hardware address in an order from left to right, an on state of a switch indicates that a value of a corresponding hardware address bit is "1", and an off state of a switch indicates that a value of a corresponding hardware address bit is "0". In FIG. 2, the first switch, the fourth switch, and the sixth switch are in an on state, and the other switches are in an off state, and therefore a hardware address 10010100 may be represented. After the output circuit is powered on, the output circuit may read the on or off states of the eight DIP switches on the front panel, to obtain and store the hardware address of the output circuit.

However, an operation process of manually configuring a hardware address is cumbersome, has a high skill requirement for a maintenance person, and is prone to an operation error. In view of this, the embodiments of this application provide a hardware address configuration method and an electronic device, so that a control circuit 101 can configure a hardware address for each output circuit. This eliminates a process of manually configuring a hardware address. Next, an electric vehicle charging pile is used as an example to further describe the technical solutions provided in the embodiments of this application. It may be understood that another type of multi-output electronic device may also be applicable to the technical solutions. For a specific implementation thereof, refer to the following embodiments. Details are not described in the embodiments of this application.

Embodiment 1 of this application provides an electronic device. Referring to the electric vehicle charging pile shown in FIG. 1, the control circuit 101 may perform one or more hardware address allocation operations after the electric vehicle charging pile is powered on. Each time a hardware address allocation operation is performed, a hardware address may be allocated to one output circuit. Next, an output circuit i is used as an example to further describe the hardware address allocation operation in this embodiment of this application. The output circuit i is any one of the output circuits 1 to N. It may also be understood that a value of i is any integer in [1, N].

After being powered on, the control circuit 101 may configure a hardware address for any one (the output circuit i) of the output circuits according to a method shown in FIG. 3. As shown in FIG. 3, the method mainly includes the following steps.

S301. The control circuit 101 enables the output circuit i. Specifically, the control circuit 101 may send a second control instruction to the N output circuits by using the communications bus 102, where the second control instruction includes a production sequence number of the output circuit i.

After the electric vehicle charging pile is powered on, the output circuits may broadcast identification information of the output circuits, for example, the output circuits separately broadcast production sequence numbers of the output circuits, so that the control circuit 101 can receive the production sequence numbers of the output circuits. Generally, the production sequence number of the output circuit may be burned inside the output circuit in a production process of the output circuit, and may identify a plurality of types of information of the output circuit, such as a production batch and a manufacturer. The production sequence number is unique, that is, one output circuit corresponds to one production sequence number. The output circuits in the electric vehicle charging pile broadcast the production sequence numbers after being powered on, so that the control circuit 101 can identify, based on the received production sequence numbers, the output circuits installed in the electric vehicle charging pile. It may also be understood that the control circuit 101 can identify, based on the received production sequence numbers, which output circuits exist in the electric vehicle charging pile. Next, an example in which identification information of the output circuit is the production sequence number is used for description.

In a possible implementation, the control circuit 101 may sequentially configure hardware addresses for the output circuits 1 to N, that is, the value of i starts from " 1" and sequentially reaches "N". It may also be understood that i takes all integers in [1, N]. It should be noted that, in this embodiment of this application, different values of i are merely used to distinguish between different output circuits in terms of expression, and it does not indicate that different output circuits have different values of "i" in an actual application. The description is also applicable to all the following variables such as "j" and "h". Details are not described again.

In another possible implementation, the control circuit 101 and the output circuits 1 to N each include a nonvolatile memory such as an electrically erasable programmable read only memory (electrically erasable programmable read only memory, EEPROM). In this case, the control circuit 101 may store, in a nonvolatile memory, a production sequence number of an output circuit for which a hardware address has been configured, and the output circuits 1 to N each may store, in a nonvolatile memory, a configured hardware address. In this case, after receiving a production sequence number broadcast by any output circuit, before performing S301, the control circuit 101 may determine, based on the stored production sequence number, whether the control circuit 101 has configured a hardware address for the output circuit corresponding to the production sequence number. For example, if the output circuit is a newly installed output circuit, the control circuit 101 has not stored identification information of the output circuit, that is, identification information stored in the control circuit 101 does not include the identification information of the output circuit. Therefore, the control circuit 101 needs to configure a hardware address for the newly installed output circuit.

For example, after receiving the production sequence number of the output circuit i, the control circuit 101 may first determine whether the control circuit 101 has stored the production sequence number of the output circuit i. If the control circuit 101 has stored the production sequence number of the output circuit i, it indicates that the control circuit 101 has configured a hardware address for the output circuit i. Therefore, a configuration process shown in FIG. 3 does not need to be performed. If the control circuit 101 has not stored the production sequence number of the output circuit i, it indicates that the output circuit i is an output circuit newly installed in the electric vehicle charging pile. In this case, the control circuit 101 may continue to perform S301, and store a hardware address of the output circuit i. After being powered on next time, the control circuit 101 may determine, based on the stored production sequence number, that the control circuit 101 has configured the hardware address for the output circuit i, and does not need to configure a hardware address for the output circuit i again.

As shown in FIG. 1, the output circuits 1 to N each may include a receiver, so that the output circuits 1 to N each can receive the second control instruction. After receiving the second control instruction, the output circuit i determines that the production sequence number in the second control instruction is the production sequence number of the output circuit i. Therefore, the output circuit i is enabled based on the second control instruction to output a signal. For each of the output circuits 1 to N other than the output circuit i, after receiving the second control instruction, the output circuit may determine that the production sequence number in the second control instruction is not a production sequence number of the output circuit. Therefore, the output circuit can ignore the second control instruction, that is, does not output a signal.

S302. The control circuit 101 determines an output conducting wire j corresponding to the output circuit i.

The output conducting wire j is an output conducting wire coupled to the output circuit i in the output conducting wires 1 to M. Because the value of i is any integer in [1, N], a value of j may also be any integer in [1, M]. It should be noted that a coupling relationship between the output circuit i and the output conducting wire j is preset by an operator. The term "preset" may be understood as follows: For the control circuit 101, the coupling relationship between the output circuit i and the output conducting wire j objectively exists, and the coupling relationship between the output circuit i and the output conducting wire j can be changed only by the operator by performing a detachment operation or an installation operation. For the control circuit 101, without consideration of a case in which the operator manually enters the coupling relationship between the output circuit i and the output circuit j, before allocating a hardware address to the output circuit i, the control circuit 101 usually does not know the coupling relationship between the output circuit i and the output circuit j, that is, the control circuit 101 does not know a specific output conducting wire to which any output circuit is coupled. Therefore, the control circuit 101 needs to first determine an output conducting wire to which the output circuit i is coupled.

As shown in FIG. 1, the control circuit 101 includes M detection ports, and the M detection ports are respectively coupled to the M output conducting wires in a one-to-one correspondence. After sending the second control instruction, the control circuit 101 may separately detect, by using the M detection ports, total output signals respectively transmitted by the M output conducting wires. Because the second control instruction is used to enable only the output circuit i to output a signal, only the output conducting wire j coupled to the output circuit i transmits a total output signal, and the total output signal is actually an output signal of the output circuit i.

In this case, in the M detection ports of the control circuit 101, a detection port j coupled to the output conducting wire j may detect high voltage input, and another detection port may detect low voltage input (or no input). Therefore, the control circuit 101 can determine that an output terminal of the output circuit i is coupled to the output conducting wire j.

In a possible implementation, the second control instruction may be used to control the output circuit i to output a signal at a small output voltage, to protect the control circuit 101 from high voltage damage. For example, the second control instruction may be used to instruct the output circuit i to output an output signal with a voltage value of 200 V.

In this embodiment of this application, the control circuit 101 may be directly or indirectly electrically connected to each output conducting wire. In a possible implementation, as shown in FIG. 1, the electric vehicle charging pile may further include a detection circuit 104, that is, the control circuit 101 is indirectly electrically connected to each output conducting wire by using the detection circuit 104. The detection circuit 104 includes M input terminals and M output terminals that are in a one-to-one correspondence, the M input terminals are respectively coupled to the M output conducting wires in a one-to-one correspondence, and the M output terminals are respectively coupled to the M detection ports of the control circuit. For example, an input terminal j of the detection circuit is coupled to the output conducting wire j, and an output terminal j of the detection circuit is coupled to the detection port j of the control circuit 101. The detection circuit may detect, by using the input terminal j, the total output signal transmitted by the output conducting wire j, perform voltage division processing on the total output signal according to a specific voltage division ratio, and provide a total output signal obtained after the voltage division processing to the detection port j of the control circuit by using the output terminal j.

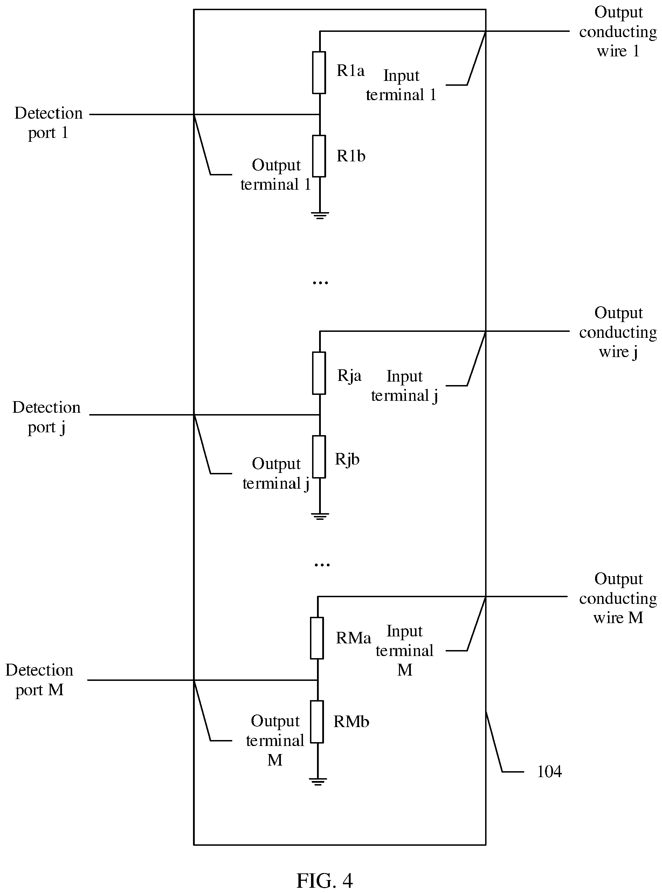

Specifically, the detection circuit 104 may include M bleeder circuits that are independent of each other. As shown in FIG. 4, a bleeder circuit between an input terminal 1 and an output terminal 1 includes a bleeder resistor R1a and a bleeder resistor R1b, a bleeder circuit between the input terminal j and the output terminal j includes a bleeder resistor Rja and a bleeder resistor Rjb, and a bleeder circuit between an input terminal M and an output terminal M includes a bleeder resistor RMa and a bleeder resistor RMb. Different bleeder circuits have a same bleeder resistor connection manner. Next, the bleeder circuit between the input terminal j and the output terminal j is used as an example for description, and another bleeder circuit is not described.

As shown in FIG. 4, one end of the bleeder resistor Rja is coupled to the output conducting wire j by using the input terminal j, the other end of the bleeder resistor Rja is coupled to one end of the bleeder resistor Rjb, and the other end of the bleeder resistor Rjb is grounded. There is a connection point between the other end of Rja and the one end of Rjb, and the connection point is coupled to the detection port j of the control circuit by using the output terminal j. The bleeder circuit including the bleeder resistor Rja and the bleeder resistor Rjb may perform, according to the specific voltage division ratio, voltage division processing on the total output signal that is of the output conducting wire j and that is detected by the input terminal j. The voltage division processing may be shown in the following formula 1:

$$V'j = [r_{jb}/(r_{ja}+r_{jb})] \cdot V_j \quad \text{(Formula 1),}$$

where
$r_{ja}$ is a resistance value of the bleeder resistor Rja, $r_{jb}$ is a resistance value of the bleeder resistor Rjb, $V_j$ is a voltage value of the total output signal of the output conducting wire j, and $V'_j$ is a voltage value of the total output signal that is of the output conducting wire j and that is obtained after the voltage division processing.

S303. The control circuit 101 allocates a hardware address corresponding to the output conducting wire j to the output circuit i according to a configuration rule. As described above, the hardware address allocated to the output circuit i needs to meet a correspondence with the output conducting wire j, and the correspondence is the configuration rule. In a possible implementation, the configuration rule may be expressed as correspondences between the M output conducting wires and M hardware address ranges. Furthermore, the M hardware address ranges may not overlap each other. For example, the configuration rule may be shown in the following Table 1:

**Table 1**

| Output conducting wire | Hardware address range |
| --- | --- |
| 1 | [1, 10] |
| 2 | [11, 20] |
| ... | ... |
| M | [(M-1)×10+1, M×10] |

As shown in Table 1, the output conducting wires 1 to M respectively correspond to different hardware address ranges. It should be noted that the foregoing hardware address is in a decimal representation form. In a specific implementation process, alternatively, after allocating a hardware address to the output circuit i, the control circuit 101 may convert the hardware address allocated to the output circuit i into a binary representation form, and send a hardware address in the binary form to the output circuit i. Alternatively, a hardware address range in a binary form is directly set in the control circuit 101. This is not limited in this embodiment of this application.

Based on the correspondences shown in Table 1, it is assumed that the output conducting wire j is the output conducting wire 1 in FIG. 1, and the output circuit i is the output circuit 2 in FIG. 1. After determining that the output circuit 2 is coupled to the output conducting wire 1, the control circuit 101 determines, according to the configuration rule shown in Table 1, that a hardware address range corresponding to the output conducting wire 1 is [1, 10]. Then, the control circuit 101 may determine an unallocated hardware address, such as a hardware address "2", from the hardware address range [1, 10] as a hardware address of the output circuit 2. In a possible implementation, the control circuit 101 may allocate, in ascending order, addresses to output circuits coupled to the output conducting wire 1. For example, when determining the hardware address for the output circuit 2, the control circuit 101 may determine a hardware address with a smallest value from unallocated hardware addresses and allocate the hardware address to the output circuit 2.

S304. The control circuit 101 sends configuration information to the output circuit i, where the configuration information is used to indicate the hardware address allocated to the output circuit i.

Specifically, the configuration information may also be sent in a form of a configuration instruction. For example, a configuration instruction includes the production sequence number of the output circuit i and the configuration information, and all the output circuits 1 to N may receive the configuration instruction. However, only the production sequence number of the output circuit i can match the production sequence number in the configuration instruction. Therefore, only the output circuit i can execute the configuration information. That is, the output circuit i can obtain, based on the configuration information, the hardware address allocated by the control circuit 101 to the output circuit i, and store the hardware address. In a possible implementation, the configuration instruction may further instruct the output circuit i to be disabled, to stop outputting a signal. Specifically, the configuration instruction may carry control information ("disabling") that instructs the output circuit i to be disabled, or the output circuit i may be disabled by default after receiving the configuration information. This is not limited in this embodiment of this application.

So far, the hardware address has been configured for the output circuit i.

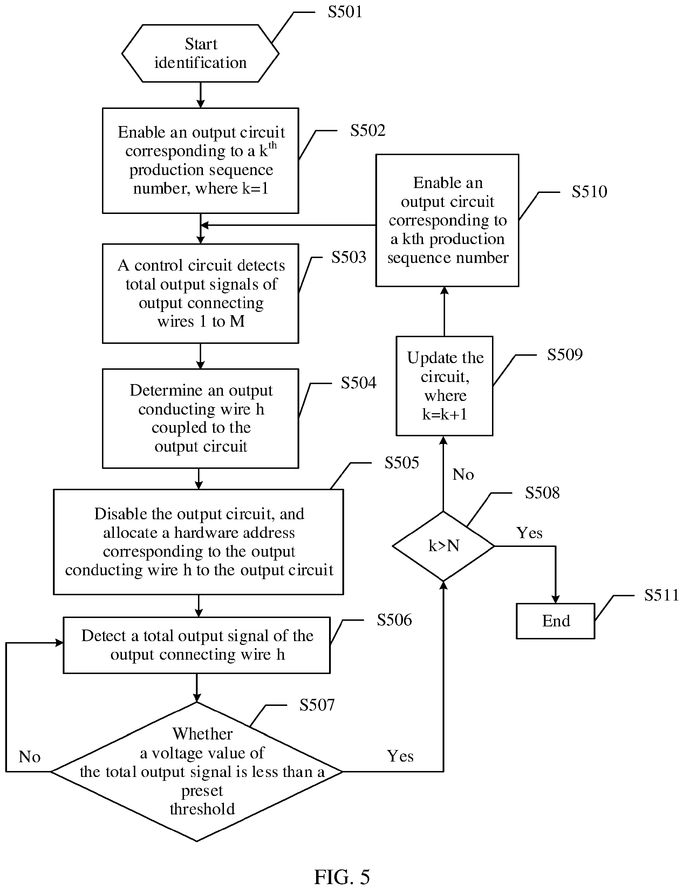

Next, Embodiment 2 of this application further provides a possible implementation in which a control circuit 101 sequentially configures hardware addresses for output circuits 1 to N. As shown in FIG. 5, the implementation mainly includes the following steps: S501. The control circuit 101 starts identification. Generally, after an electric vehicle charging pile is powered on, the control circuit 101 may automatically start identification. Certainly, alternatively, an operator may manually trigger the control circuit 101 to start identification. This is not limited in this embodiment of this application. In an identification process, the control circuit 101 may identify production sequence numbers sent by the output circuits.

S502. The control circuit 101 enables an output circuit corresponding to a $k^{th}$ production sequence number. Specifically, the control circuit 101 may perform a hardware address allocation operation a plurality of times in a preset execution order, to sequentially allocate the hardware addresses to the output circuits. For example, after obtaining the production sequence numbers of the N output circuits, the control circuit 101 may arrange the production sequence numbers of the output circuits in the execution order, and sequentially enable, based on an arrangement result, the output circuits corresponding to the production sequence numbers, to separately allocate the hardware addresses to the N output circuits. The execution order may be an ascending order or a descending order of the production sequence numbers, or may be an order in which the control circuit 101 receives the production sequence numbers of the output circuits. This is not limited in this embodiment of this application. As shown in FIG. 5, the control circuit 101 first enables an output circuit corresponding to the first production sequence number, that is, k=1.

S503. The control circuit 101 separately detects total output signals of output conducting wires 1 to M.

S504. The control circuit 101 determines an output conducting wire h coupled to the output circuit corresponding to the $k^{th}$ production sequence number.

S505. The control circuit 101 disables the output circuit corresponding to the $k^{th}$ production sequence number, and allocates a hardware address corresponding to the output conducting wire h to the output circuit corresponding to the $k^{th}$ production sequence number.

For a specific implementation of S502 to S505, refer to the hardware address allocation operation provided in the foregoing Embodiment 1. Details are not described again.

As shown in FIG. 1, the electric vehicle charging pile further includes a discharging circuit 105. Input terminals of the discharging circuit 105 are respectively coupled to the output conducting wires 1 to N, and a control terminal of the discharging circuit 105 is coupled to the control circuit 101. The discharging circuit 105 includes a grounding circuit, and the ground circuit may release a residual charge in the output conducting wires 1 to M to the ground.

In view of this, as shown in FIG. 5, the method further includes S506: The control circuit 101 enables the discharging circuit 105, and detects a total output signal of the output conducting wire h.

S507. The control circuit 101 determines whether a voltage value of the total output signal of the output conducting wire h is less than a preset threshold; and if yes, continues to perform S508; or if no, returns to S506. It may be understood that there may be a specific delay in consecutively performing S506. This is not limited in this embodiment of this application.

S508. The control circuit 101 disables the discharging circuit 105, and determines whether a current value of k is greater than N; and if yes, performs S511, that is, ends a hardware address configuration process; or if no, continues to perform S509.

S509: Update the circuit, where the value of k is increased by 1, that is, continue to configure a hardware address for an output circuit corresponding to a $(k+1)^{th}$ production sequence number, where the value of k is increased by 1, that is, k=k+1, in a next configuration process.

S510: Enable the output circuit corresponding to the $k^{th}$ production sequence number, and return to and continue to perform S503.

It should be noted that after S509, before S510, the control circuit 101 may further determine whether a stored production sequence number includes the $k^{th}$ production sequence number; and if no, continue to perform S510; or if yes, may return to and continue to perform S508. In this case, when S508 is next performed, an operation of disabling the discharging circuit 105 may not be performed.

Similarly, before S502, it may also be first determined whether a stored production sequence number includes the first production sequence number; and if no, S502 continues to be performed; or if yes, S509 may be directly performed.

Embodiment 3 of this application provides another electronic device. In the electric vehicle charging pile shown in FIG. 1, the output circuit is coupled to the output conducting wire in a fixed manner, in other words, a coupling manner of the output circuit and the output conducting wire is fixed; and a coupling relationship between the output circuit and the output conducting wire does not change in a working process of the electric vehicle charging pile.

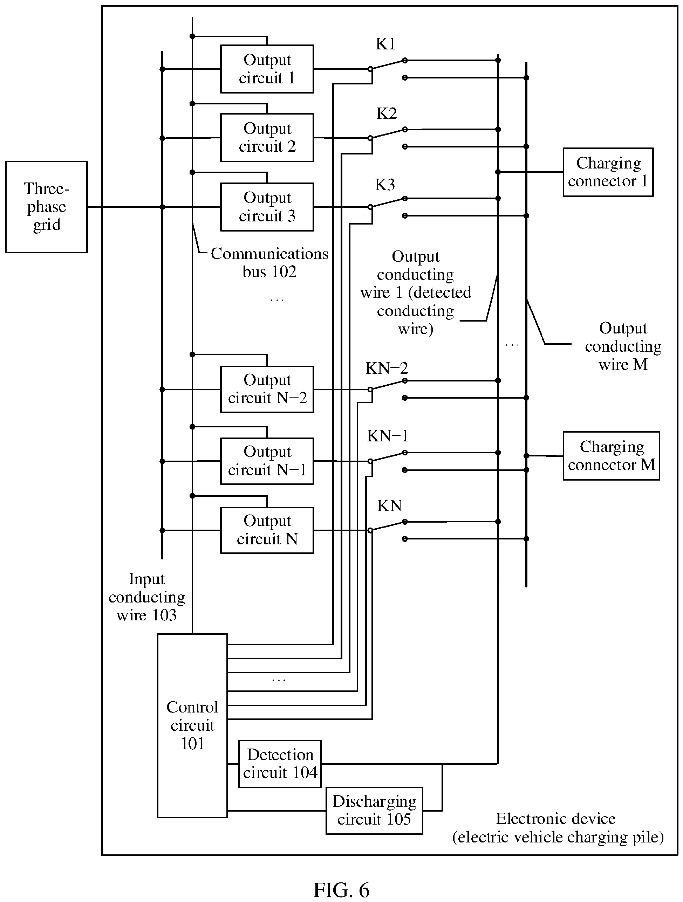

To adapt to different application requirements, there is another possible coupling manner - flexible coupling. FIG. 6 is a schematic structural diagram of another electronic device according to Embodiment 3 of this application. The electronic device is also a multi-output electronic device. For example, the electronic device shown in FIG. 6 may also be used as a multi-connector electric vehicle charging pile. As shown in FIG. 6, the electronic device includes a control circuit 101, N output circuits (output circuits 1 to N), N switch circuits (switch circuits K1 to KN), and M output conducting wires (output conducting wires 1 to M).

Control terminals of the output circuits 1 to N are connected in parallel by using a communications bus 102 and are coupled to the control circuit 101. Aspects such as a specific implementation of the output circuits 1 to N, a specific implementation of the control circuit 101, a manner of controlling the output circuits 1 to N by the control circuit 101 are all similar to those of the electronic device shown in FIG. 1. Details are not described herein again.

In FIG. 6, control terminals of the N switch circuits are separately coupled to the control circuit 101, and input terminals of the N switch circuits are respectively coupled to output terminals of the N output circuits in a one-to-one correspondence. It can also be expressed that an output terminal of an output circuit i is coupled to an input terminal of a switch circuit Ki, where a value of i is any integer in [1, N], or i takes all integers in [1, N]. Output terminals of each of the N switch circuits may be coupled to the M output conducting wires, that is, the switch circuit Ki includes M output terminals, and the M output terminals are respectively coupled to the M output conducting wires in a one-to-one correspondence. The switch circuit Ki may conduct, under control of the control circuit 101, a transmission path between the output circuit i and any one of the M output conducting wires. In this embodiment of this application, the switch circuit may be a switch component such as a relay or a switch transistor. This is not limited.

In the electronic device shown in FIG. 6, a unique hardware address is also configured for each output circuit, that is, any two of the output circuits 1 to N have different hardware addresses. In addition, there is a correspondence between a hardware address of an output circuit and a switch circuit coupled to the output circuit. For example, in FIG. 6, a hardware address of the output circuit 1 corresponds to the switch circuit K1, and a hardware address of an output circuit 2 corresponds to a switch circuit K2. In this case, the hardware address of each output circuit may represent a coupling relationship between the output circuit and a switch circuit, and the control circuit 101 may adjust a total output signal of a target output conducting wire by using the following method, including the following steps:

Step 1: The control circuit 101 determines one or more target switch circuits of the to-be-adjusted target output conducting wire. For example, the target output conducting wire is the output conducting wire 1, that is, the control circuit 101 needs to adjust a total output signal of the output conducting wire 1. In this case, the control circuit 101 may control, based on the adjustment requirement, one or more switch circuits to conduct or disconnect transmission paths between corresponding output circuits and the output conducting wire 1. For example, assuming that power of the total output signal of the output conducting wire 1 needs to be increased, some switch units may be controlled to conduct transmission paths between corresponding output circuits and the output conducting wire 1 to increase a quantity of output circuits that transmit output signals to the output conducting wire 1, to increase total output power of the output conducting wire 1.

Step 2: The control circuit 101 determines, according to a configuration rule, one or more hardware addresses respectively corresponding to the one or more target switch circuits. The configuration rule is a rule for configuring a hardware address for an output circuit, and may indicate a correspondence between a hardware address and a switch circuit. The one or more hardware addresses respectively corresponding to the one or more target switch circuits may be determined according to the configuration rule.

Step 3: The control circuit 101 sends a third control instruction to the N output circuits by using the communications bus, and/or sends a fourth control instruction to the one or more target switch circuits.

The third control instruction is similar to the first control instruction in Embodiment 1. Details are not described herein again.

The fourth control instruction is used to instruct the target switch circuit to disconnect or conduct a transmission path of an output signal to the to-be-adjusted target output conducting wire. For example, for a switch circuit Ki, the fourth control instruction may include identification information of an output terminal coupled to a target output conducting wire in M output terminals of the switch circuit Ki, and the switch circuit Ki may connect the corresponding output terminal based on the identification information in the fourth control instruction, to conduct a transmission path between an output circuit i and the target output conducting wire.

It may be understood that, when adjusting the total output signal of the target output conducting wire, the control circuit 101 may adjust working statuses of only one or more target output circuits (for example, increase or decrease output power of the one or more target output circuits), may control only the target switch circuit (for example, disconnect a transmission path between the target switch circuit and the target output conducting wire), or may adjust working statuses of one or more target output circuits and control the target switch circuit (for example, disable the target switch circuit when disconnecting a transmission path between the target switch circuit and the target output conducting wire). In a specific application process, an adjustment method may be flexibly selected based on an adjustment requirement. Adjustment methods are not listed one or one in this embodiment of this application.

It can be learned from the foregoing process that, in the flexible coupling manner, the control circuit 101 can more flexibly adjust a total output signal of each output conducting wire. However, controlling each output circuit by the control circuit 101 still depends on a hardware address. In view of this, the embodiments of this application further provide a hardware address configuration method, so that a control circuit 101 can configure a hardware address for each output circuit. This eliminates a process of manually configuring a hardware address. Next, an electric vehicle charging pile is used as an example to further describe the technical solutions provided in the embodiments of this application. It may be understood that another type of multi-output electronic device that uses a flexible connection manner may also be applicable to the technical solutions. For a specific implementation thereof, refer to the following embodiments. Details are not described in the embodiments of this application.

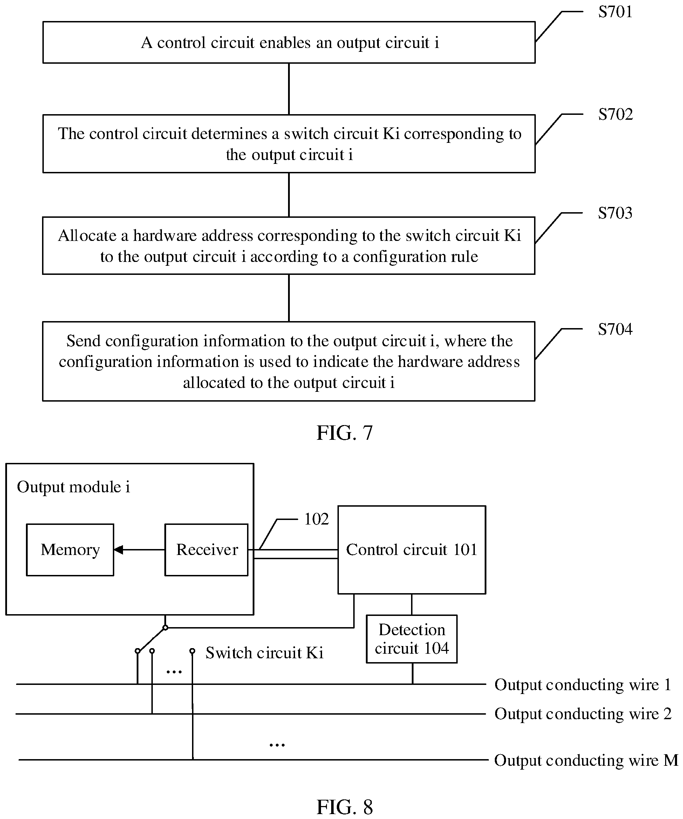

After being powered on, the control circuit 101 may configure a hardware address for any one of output circuits according to a method shown in FIG. 7. As shown in FIG. 7, the method mainly includes the following steps.

S701. The control circuit 101 enables an output circuit i. For a specific implementation, refer to S301. Details are not described herein again.

S702. The control circuit 101 determines a switch circuit Ki corresponding to the output circuit i.

It should be noted that a coupling relationship between the output circuit i and the switch circuit Ki is preset, that is, objectively exists, and the coupling relationship between the output circuit i and the switch circuit Ki can be changed only by an operator by performing a detachment operation or an installation operation. For the control circuit 101, without consideration of a case in which the operator manually enters the coupling relationship between the output circuit i and the switch circuit Ki, before allocating a hardware address to the output circuit i, the control circuit 101 usually does not know the coupling relationship between the output circuit i and the switch circuit Ki. Therefore, the control circuit 101 needs to first determine a switch circuit to which the output circuit i is coupled.

As shown in FIG. 6, the control circuit 101 is further coupled to a detected conducting wire (the output conducting wire 1) in the M output conducting wires, and the control circuit 101 may detect a total output signal on the detected conducting wire. It should be noted that using the output conducting wire 1 as the detected conducting wire is only a specific example. In a specific implementation process, any one of the M output conducting wires may be used as the detected conducting wire.

In a specific implementation process of S702, the control circuit 101 may sequentially control the N switch circuits to conduct transmission paths to the detected conducting wire; and after receiving a total output signal transmitted by the detected conducting wire, determine that the last switch circuit that is enabled before the total output signal is received is the switch circuit Ki corresponding to the output circuit i. In this case, the total output signal transmitted by the detected conducting wire is actually an output signal of the output circuit i.

The control circuit 101 sequentially controls the N switch circuits to conduct the transmission paths to the detected conducting wire (the output conducting wire 1). For each switch circuit other than the switch circuit Ki, after the control circuit 101 controls the switch circuit to conduct a transmission path to the detected conducting wire, because all output circuits other than the output circuit i are in a disabled state, no output signal is transmitted on the detected conducting wire, and the control circuit 101 detects low voltage input (or no input) on the detected conducting wire. As shown in FIG. 8, after the control circuit 101 controls the switch circuit Ki to conduct a transmission path to the detected conducting wire (the output conducting wire 1), an output signal of the output circuit i may be output to the detected conducting wire by using the switch circuit Ki. In this case, the control circuit 101 may detect high voltage input on the detected conducting wire, and then the control circuit 101 may determine that the last enabled switch circuit is the switch circuit Ki corresponding to the output circuit i.

Similarly to Embodiment 1, to protect the control circuit 101 from high voltage damage, the control circuit 101 may control the output circuit i to output a signal at a smaller output voltage, for example, may control the output circuit i to output an output signal with a voltage value of 200 V.

In this embodiment of this application, the control circuit 101 may be directly or indirectly electrically connected to the detected conducting wire. As shown in FIG. 6 and FIG. 8, a detection circuit 104 may be further disposed between the control circuit 101 and the detected conducting wire, that is, the control circuit 101 is indirectly electrically connected to the detected conducting wire by using the detection circuit 104. An input terminal of the detection circuit 104 is coupled to the detected conducting wire, and an output terminal of the detection circuit 104 is coupled to the control circuit 101. The detection circuit 104 may perform voltage division processing on the total output signal of the detected conducting wire, and provide a total output signal obtained after the voltage division processing to the control circuit 101. Specifically, the detection circuit 104 may include a bleeder circuit. For example, the bleeder circuit may be the bleeder circuit including Rja and Rjb in FIG. 4. Details are not described herein.

S703. Configure a hardware address corresponding to the switch circuit Ki for the output circuit i according to a configuration rule. As described above, the hardware address allocated to the output circuit i needs to meet a correspondence with the switch circuit Ki, and the correspondence is the configuration rule. In a possible implementation, the configuration rule may be expressed as that the hardware address of the output circuit i is identification information of the switch circuit Ki. For example, the identification information of the switch circuit Ki may be a sequence number of the switch circuit Ki. For example, if sequence numbers of switch circuits K1 to KN in an electronic device are respectively 1 to N, hardware addresses respectively corresponding to the switch circuits K1 to KN are 1 to N, that is, hardware addresses of output circuits 1 to N are respectively 1 to N. The sequence number of the switch circuit Ki is i, and the hardware address of the corresponding output circuit i is i.

It may be understood that the sequence numbers of the switch circuits K1 to KN in the electronic device may be alternatively of another type. For example, the sequence numbers of K1 to KN are respectively N to 1, and the hardware addresses of the output circuits 1 to N are respectively N to 1. In addition, the sequence number of the switch circuit and the hardware address of the output circuit may be alternatively represented in a binary form. This is not limited in this embodiment of this application.

S704. Send configuration information to the output circuit i, where the configuration information is used to indicate the hardware address allocated to the output circuit i. For a specific implementation, refer to S304. Details are not described herein again.

So far, the hardware address has been configured for the output circuit i.

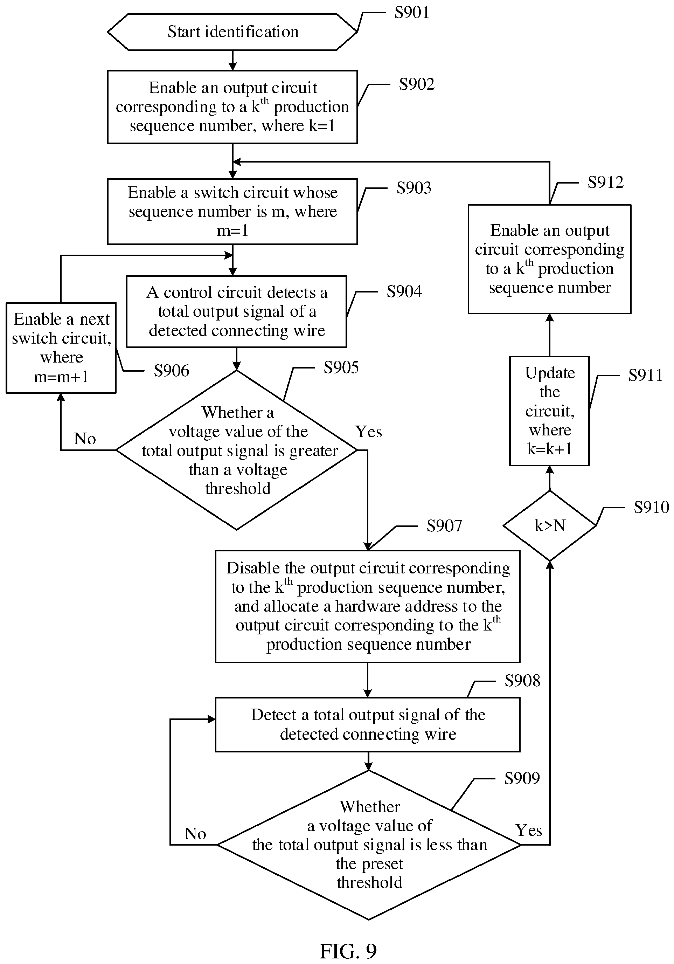

For the electronic device shown in FIG. 6, Embodiment 4 of this application further provides a hardware address configuration method, to sequentially configure hardware addresses for the output circuits 1 to N in FIG. 6. For example, the method may be shown in FIG. 9, and mainly includes the following steps:

S901. The control circuit 101 starts identification. For a specific implementation of S901, refer to step S501 in Embodiment 2. Other details are not described.

S902. The control circuit 101 enables an output circuit corresponding to a $k^{th}$ production sequence number. For a specific implementation of S902, refer to S502. Other details are not described.

S903. The control circuit 101 sequentially enables the switch circuits. For example, in FIG. 9, the switch circuits are sequentially enabled in an order of sequence numbers of the switch circuits from 1 to N, that is, a sequence number of a switch circuit is m=1.

It may be understood that alternatively, the switch circuits may be enabled in a plurality of possible orders, such as a sequence of sequence numbers from 2 to N+1 or N to 1.

S904. The control circuit 101 detects a total output signal of a detected conducting wire.

S905. The control circuit 101 determines whether a voltage value of the total output signal is greater than a voltage threshold; and if yes, continues to perform S907; or if no, continues to perform S906.

S906: The control circuit 101 enables a next switch circuit. It may also be understood that the control circuit 101 enables a circuit whose sequence number is m+1, where a value of m is increased by 1, that is, m=m+1, in a next step. S904 continues to be performed. It may be understood that there may be a specific delay between two consecutive times of performing S904. This is not limited in this embodiment of this application.

S907. After detecting that the voltage value of the total output signal of the detected conducting wire is greater than the voltage threshold, the control circuit 101 may disable the output circuit corresponding to the $k^{th}$ production sequence number, and determine a switch circuit coupled to the output circuit corresponding to the $k^{th}$ production sequence number, and therefore may allocate a hardware address to the output circuit corresponding to the $k^{th}$ production sequence number. For a specific implementation of this step, refer to the foregoing Embodiment 3. Details are not described again.

As shown in FIG. 6 and FIG. 8, a discharging circuit 105 may be further disposed between the detected conducting wire and the control circuit 101. For a specific implementation of the discharging circuit, refer to the foregoing Embodiment 2. Details are not described again.

In view of this, as shown in FIG. 9, the method further includes S908: The control circuit 101 enables the discharging circuit 105, and detects a total output signal of the detected conducting wire.

S909. The control circuit 101 determines whether a voltage value of the total output signal of the detected conducting wire is less than the preset threshold; and if yes, continues to perform S910; or if no, returns to S908.

For a specific implementation of S910 to S912, refer to S508 to S510. Details are not described again. After performing S912, the control circuit 101 returns to and continues to perform S903.

It can be learned from the foregoing Embodiment 1 to Embodiment 4 that, according to the electronic device and the hardware address configuration method provided in the embodiments of this application, the control circuit in the electronic device may configure the hardware address for each output circuit. This eliminates a process of manually configuring a hardware address. This can reduce maintenance costs, and can also reduce manual intervention. This reduces errors and improves reliability of the electronic device. In addition, in the technical solutions provided in the embodiments of this application, a DIP switch does not need to be disposed on a front panel of the output circuit. This helps reduce costs of the output circuit and costs of the electronic device.

**Claims**

1. An electronic device, comprising: a control circuit (101), N output circuits, and M output conducting wires, wherein both M and N are integers greater than 1;

   connection relationships between the N output circuits and the M output conducting wires are preset;
   control terminals of the N output circuits are connected in parallel and are coupled to the control circuit (101);
   the control circuit (101) comprises M detection ports, and the M detection ports are respectively coupled to the M output conducting wires in a one-to-one correspondence; and
   the control circuit (101) is configured to perform a hardware address allocation operation one or more times, wherein the hardware address allocation operation comprises:

      enabling (S301, S701) a first output circuit, so that the first output circuit sends an output signal, wherein the first output circuit is one of the N output circuits, and when the hardware address allocation operation is performed a plurality of times, a different first output circuit is enabled in each time;
      when detecting, by using a first detection port, a first output signal generated after the output signal passes through a first output conducting wire, determining (S303) a first hardware address of the first output circuit according to a configuration rule, wherein the first hardware address corresponds to the first output conducting wire, the first detection port is one of the M detection ports, and the first output conducting wire is an output conducting wire coupled to the first detection port; and
      sending the first hardware address to the first output circuit, wherein
      the first output circuit is further configured to store the first hardware address.

2. The electronic device according to claim 1, wherein the electronic device further comprises a detection circuit (104), and the detection circuit (104) comprises M input terminals and M output terminals that are in a one-to-one correspondence, the M input terminals of the detection circuit (104) are respectively coupled to the M output conducting wires, and the M output terminals of the detection circuit (104) are respectively coupled to the M detection ports of the control circuit (101); and
the detection circuit (104) is configured to:
receive the output signal of the first output circuit by using a first input terminal coupled to the first output conducting wire, perform voltage division processing on the output signal, and send the first output signal to the control circuit (101) by using a first output terminal corresponding to the first input terminal, wherein the first input terminal is one of the M input terminals, the first output terminal is one of the M output terminals, and the first output signal is an output signal obtained after the voltage division processing.

3. The electronic device according to claim 1 or 2, wherein
the control circuit (101) is further configured to:

> determine, according to the configuration rule, one or more target hardware addresses corresponding to a target output conducting wire whose total output signal has to be adjusted, wherein the target output conducting wire is one of the M output conducting wires; and
> send a first control instruction to the N output circuits, wherein the first control instruction comprises control information and the one or more target hardware addresses; and
> the first output circuit is further configured to:
>
>> receive the first control instruction; and
>> if the one or more target hardware addresses comprise the first hardware address, execute the control information.

4. The electronic device according to any one of claims 1 to 3, wherein
the first output circuit is further configured to:

> send identification information of the first output circuit to the control circuit (101); and
> the control circuit (101) is specifically configured to:
> send a second control instruction to the N output circuits, wherein the second control instruction comprises the identification information of the first output circuit, and the second control instruction is used to enable the first output circuit.

5. The electronic device according to claim 4, wherein
the control circuit (101) is further configured to:

> before sending the second control instruction to the N output circuits, determine that stored identification information does not comprise the identification information of the first output circuit; and
> store the identification information of the first output circuit.

6. The electronic device according to any one of claims 1 to 5, wherein the configuration rule comprises correspondences between the M output conducting wires and M hardware address ranges; and
the control circuit (101) is specifically configured to:

> obtain a hardware address range corresponding to the first output conducting wire; and
> determine the first hardware address from unallocated hardware addresses in the hardware address range.

7. The electronic device according to any one of claims 1 to 6, wherein the electronic device is a charging pile, the electronic device further comprises an input conducting wire, and input terminals of the N output circuits are coupled to the input conducting wire;

> the input conducting wire is configured to: be coupled to an alternating current power supply; and receive an alternating current provided by the alternating current power supply, and provide the alternating current to the N output circuits; and
> the first output circuit is specifically configured to:
> convert the alternating current received from the input conducting wire into a direct current, and output an output signal in a form of a direct current to the corresponding first output conducting wire.

8. An electronic device, comprising: a control circuit (101), N output circuits, N switch circuits, and M output conducting wires, wherein both M and N are integers greater than 1;

> connection relationships between the N output circuits and the N switch circuits are preset such that input terminals of the N switch circuits are respectively coupled to output terminals of the N output circuits in a one-to-one correspondence, and each switch circuit includes M output terminals, and the M output terminals of each of the N switch circuits are respectively coupled to the M output conducting wires in a one-to-one correspondence;
> control terminals of the N output circuits are connected in parallel and are coupled to the control circuit (101);
> control terminals of the N switch circuits are separately coupled to the control circuit (101) and the control circuit is further coupled to one of the M output conducting wires used as a detected conducting wire in the M output conducting wires; and

the control circuit (101) is configured to perform a hardware address allocation operation one or more times, wherein the hardware address allocation operation comprises:

enabling (S301, S701) a first output circuit, so that the first output circuit sends an output signal, wherein the first output circuit is one of the N output circuits, and when the hardware address allocation operation is performed a plurality of times, a different first output circuit is enabled in each time; sequentially controlling the N switch circuits to conduct transmission paths to the detected conducting wire;

if detecting, after controlling a first switch circuit to conduct a transmission path to the detected conducting wire, a first output signal generated after the output signal passes through the detected conducting wire, configuring a first hardware address for the first output circuit according to a configuration rule, wherein the first hardware address corresponds to the first switch circuit; and sending the first hardware address to the first output circuit, wherein

the first output circuit is further configured to store the first hardware address.

9. The electronic device according to claim 8, wherein the electronic device further comprises a detection circuit (104), an input terminal of the detection circuit (104) is coupled to the detected conducting wire, and an output terminal of the detection circuit (104) is coupled to the control circuit (101); and the detection circuit (104) is configured to: receive the output signal of the first output circuit, perform voltage division processing on the output signal, and send the first output signal to the control circuit (101), wherein the first output signal is an output signal obtained after the voltage division processing.

10. The electronic device according to claim 8 or 9, wherein the control circuit (101) is further configured to:

determine one or more target switch circuits of a target output conducting wire whose total output signal has to be adjusted, wherein the target output conducting wire is one of the M output conducting wires; determine, according to the configuration rule, one or more hardware addresses respectively corresponding to the one or more target switch circuits; and send a third control instruction to the N output circuits, wherein the third control instruction comprises control information and the one or more hardware addresses; and/or send a fourth control instruction to the one or more target switch circuits, wherein the fourth control instruction is used to instruct the target switch circuit to disconnect or conduct a transmission path of an output signal to the to-be-adjusted target output conducting wire; and the first output circuit is further configured to:

receive the third control instruction; and if the one or more hardware addresses comprise the first hardware address, execute the control information.

11. The electronic device according to any one of claims 8 to 10, wherein the first output circuit is further configured to:

send identification information of the first output circuit to the control circuit (101); and the control circuit (101) is specifically configured to: send a second control instruction to the N output circuits, wherein the second control instruction comprises the identification information of the first output circuit, and the second control instruction is used to enable the first output circuit.

12. The electronic device according to claim 11, wherein the control circuit (101) is further configured to:

before sending the second control instruction to the N output circuits, determine that stored identification information does not comprise the identification information of the first output circuit; and store the identification information of the first output circuit.

13. The electronic device according to any one of claims 8 to 12, wherein the configuration rule comprises that the hardware address of the first output circuit is identification information of the first switch circuit.

14. The electronic device according to any one of claims 8 to 13, wherein the electronic device is a charging pile, the electronic device further comprises an input conducting wire, and input terminals of the N output circuits are coupled to the input conducting wire;

the input conducting wire is configured to: be coupled to an alternating current power supply; and receive an alternating current provided by the alternating current power supply, and provide the alternating current to the N output circuits; and the first output circuit is specifically configured to:

convert the alternating current received from the input conducting wire into a direct current, and output an output signal in a form of a direct current to the corresponding first switch circuit.

15. A hardware address configuration method for an electronic device comprising a control circuit, N output circuits, and M output conducting wires wherein both M and N are integers greater than 1, connection relationships between the N output circuits and the M output conducting wires are preset, control terminals of the N output circuits are connected in parallel and are coupled to the control circuit (101), the control circuit (101) comprises M detection ports, and the M detection ports are respectively coupled to the M output conducting wires in a one-to-one correspondence, the control circuit performing a hardware address allocation operation one or more times, wherein the hardware address allocation operation comprises:

enabling (S301, S701) a first output circuit, so that the first output circuit sends an output signal, wherein the first output circuit is one of the N output circuits, and when the hardware address allocation operation is performed a plurality of times, a different first output circuit is enabled each time;

when detecting, by using a first detection port, a first output signal generated after the output signal passes through a first output conducting wire, configuring (S303) a first hardware address for the first output circuit according to a configuration rule, wherein the first hardware address corresponds to the first output conducting wire, the first detection port is one of the M detection ports, and the first output conducting wire is an output conducting wire coupled to the first detection port;

sending the first hardware address to the first output circuit; and

storing, by the first output circuit, the first hardware address.

16. The method according to claim 15, wherein after the sending the first hardware address to the first output circuit, the method further comprises:

determining, according to the configuration rule, one or more target hardware addresses corresponding to a target output conducting wire whose total output signal has to be adjusted, wherein the target output conducting wire is one of the M output conducting wires; and

sending a first control instruction to the N output circuits, wherein the first control instruction comprises control information and the one or more target hardware addresses, and the first control instruction is used to instruct one or more output circuits respectively corresponding to the one or more target hardware addresses to execute the control information.

17. The method according to claim 15 or 16, wherein the enabling a first output circuit comprises:

sending a second control instruction to the N output circuits, wherein the second control instruction comprises identification information of the first output circuit, and the second control instruction is used to enable the first output circuit.

18. The method according to claim 17, wherein before the enabling a first output circuit, the method further comprises:

determining that stored identification information does not comprise the identification information of the first output circuit; and

storing the identification information of the first output circuit.

19. The method according to any one of claims 15 to 18, wherein the configuration rule comprises correspondences between the M output conducting wires and M hardware address ranges, and the M hardware address ranges do not overlap each other; and the configuring a first hardware address for the first output circuit according to a configuration rule comprises:

obtaining a hardware address range corresponding to the first output conducting wire; and determining the first hardware address from unallocated hardware addresses in the hardware address range.

20. A hardware address configuration method for an electronic device, comprising a control circuit (101), N output circuits, N switch circuits, and M output conducting wires, wherein both M and N are integers greater than 1, connection relationships between the N output circuits and the N switch circuits are preset such that input terminals of the N switch circuits are respectively coupled to output terminals of the N output circuits in a one-to-one correspondence, and each switch circuit includes M output terminals, and the M output terminals of each of the N switch circuits are respectively coupled to the M output conducting wires in a one-to-one correspondence, control terminals of the N output circuits are connected in parallel and are coupled to the control circuit (101), control terminals of the N switch circuits are separately coupled to the control circuit (101) and the control circuit is further coupled to one of the M output conducting wires used as a detected conducting wire in the M output conducting wires, and the control circuit (101) is performing a hardware address allocation operation one or more times, wherein the hardware address allocation operation comprises:

enabling (S301) a first output circuit, so that the first output circuit sends an output signal, wherein the first output circuit is one of N output circuits, and when the hardware address allocation operation is performed a plurality of times, a different first output circuit is enabled in each time ; sequentially controlling the N switch circuits to conduct transmission paths to one of the M output conducting wires used as a detected conducting wire;

if detecting, after controlling a first switch circuit to conduct a transmission path to the detected conducting wire, a first output signal generated after the output signal passes through the detected conducting wire, configuring (S304, S704) a first hardware address for the first output circuit according to a configuration rule, wherein the first hardware address corresponds to the first switch circuit;

sending the first hardware address to the first output circuit; and

storing, by the first output circuit, the first hardware address.

21. The method according to claim 20, wherein after the sending the first hardware address to the first output circuit, the method further comprises:

determining one or more target switch circuits of a target output conducting wire whose total output signal has to be adjusted, wherein the target output conducting wire is one of the M output conducting wires;

determining, according to the configuration rule, one or more hardware addresses respectively corresponding to the one or more target switch circuits; and

sending a third control instruction to the N output circuits, wherein the third control instruction comprises control information and the one or more hardware addresses, and the third control instruction is used to instruct one or more output circuits respectively corresponding to the one or more hardware addresses to execute the control information; and/or

sending a fourth control instruction to the one or more target switch circuits, wherein the fourth control instruction is used to instruct the target switch circuit to disconnect or conduct a transmission path of an output signal to the to-be-adjusted target output conducting wire.

22. The method according to claim 20 or 21, wherein the enabling a first output circuit comprises:
sending a second control instruction to the N output circuits, wherein the second control instruction comprises identification information of the first output circuit, and the second control instruction is used to enable the first output circuit.

23. The method according to claim 22, wherein before the sending a second control instruction to the N output circuits, the method further comprises:

determining that stored identification information does not comprise the identification information of the first output circuit; and

storing the identification information of the first output circuit.

24. The method according to any one of claims 20 to 23, wherein the configuration rule comprises that the hardware address of the first output circuit is identification information of the first switch circuit.

**Patentansprüche**

1. Elektronische Vorrichtung, umfassend: eine Steuerschaltung (101), N Ausgangsschaltungen und M Ausgangsleitungsdrähte, wobei sowohl M als auch N ganze Zahlen größer als 1 sind;

wobei Verbindungsbeziehungen zwischen den N Ausgangsschaltungen und den M Ausgangsleitungsdrähten voreingestellt sind;

wobei Steueranschlüsse der N Ausgangsschaltungen parallel geschaltet sind und mit der Steuerschaltung (101) gekoppelt sind;

wobei die Steuerschaltung (101) M Erfassungsports umfasst, und die M Erfassungsports jeweils mit den M Ausgangsleitungsdrähten in einer Eins-zu-Eins-Entsprechung gekoppelt sind; und

die Steuerschaltung (101) konfiguriert ist, um einen Hardwareadressenzuweisungsvorgang einmal oder mehrmals durchzuführen, wobei der Hardwareadressenzuweisungsvorgang umfasst:

Aktivieren (S301, S701) einer ersten Ausgangsschaltung, so dass die erste Ausgangsschaltung ein Ausgangssignal sendet, wobei die erste Ausgangsschaltung eine der N Ausgangsschaltungen ist, und wenn der Hardwareadressenzuweisungsvorgang mehrmals durchgeführt wird, jedes Mal eine unterschiedliche erste Ausgangsschaltung aktiviert wird;

bei einem Erfassen, unter Verwendung eines ersten Erfassungsports, eines ersten Ausgangssignals, das erzeugt wird, nachdem das Ausgangssignal durch einen ersten Ausgangsleitungsdraht passiert, Bestimmen (S303) einer ersten Hardwareadresse der ersten Ausgangsschaltung gemäß einer Konfigurationsregel, wobei die erste Hardwareadresse dem ersten Ausgangsleitungsdraht entspricht, der erste Erfassungsport einer der M Erfassungsports ist und der erste Ausgangsleitungsdraht ein Ausgangsleitungsdraht ist, der mit dem ersten Erfassungsport gekoppelt ist; und
Senden der ersten Hardwareadresse an die erste Ausgangsschaltung, wobei
die erste Ausgangsschaltung ferner konfiguriert ist, um die erste Hardwareadresse zu speichern.

2. Elektronische Vorrichtung nach Anspruch 1, wobei die elektronische Vorrichtung ferner eine Erfassungsschaltung (104) umfasst und die Erfassungsschaltung (104) M Eingangsanschlüsse und M Ausgangsanschlüsse umfasst, die in einer Eins-zu-Eins-Entsprechung stehen, wobei die M Eingangsanschlüsse der Erfassungsschaltung (104) jeweils mit den M Ausgangsleitungsdrähten gekoppelt sind, und die M Ausgangsanschlüsse der Erfassungsschaltung (104) jeweils mit den M Erfassungsports der Steuerschaltung (101) gekoppelt sind; und
die Erfassungsschaltung (104) konfiguriert ist zum:
Empfangen des Ausgangssignals der ersten Ausgangsschaltung durch Verwenden eines ersten Eingangsanschlusses, der mit dem ersten Ausgangsleitungsdraht gekoppelt ist, Durchführen einer Spannungsteilungsverarbeitung an dem Ausgangssignal und Senden des ersten Ausgangssignals an die Steuerschaltung (101) durch Verwenden eines ersten Ausgangsanschlusses, der dem ersten Eingangsanschluss entspricht, wobei der erste Eingangsanschluss einer der M Eingangsanschlüsse ist, der erste Ausgangsanschluss einer der M Ausgangsanschlüsse ist und das erste Ausgangssignal ein Ausgangssignal ist, das nach der Spannungsteilungsverarbeitung erhalten wird.

3. Elektronische Vorrichtung nach Anspruch 1 oder 2, wobei
die Steuerschaltung (101) ferner konfiguriert ist zum:

Bestimmen, gemäß der Konfigurationsregel, einer oder mehrerer Zielhardwareadressen, die einem Zielausgangsleitungsdraht entsprechen, dessen Gesamtausgangssignal angepasst werden muss, wobei der Zielausgangsleitungsdraht einer der M Ausgangsleitungsdrähte ist; und
Senden einer ersten Steueranweisung an die N Ausgangsschaltungen, wobei die erste Steueranweisung Steuerinformationen und die eine oder die mehreren Zielhardwareadressen umfasst; und
die erste Ausgangsschaltung ferner konfiguriert ist zum:

Empfangen der ersten Steueranweisung; und
falls die eine oder die mehreren Zielhardwareadressen die erste Hardwareadresse umfassen, Ausführen der Steuerinformationen.

4. Elektronische Vorrichtung nach einem der Ansprüche 1 bis 3, wobei die erste Ausgangsschaltung ferner konfiguriert ist zum:

Senden von Identifikationsinformationen der ersten Ausgangsschaltung an die Steuerschaltung (101); und
wobei die Steuerschaltung (101) speziell konfiguriert ist zum:
Senden einer zweiten Steueranweisung an die N Ausgangsschaltungen, wobei die zweite Steueranweisung die Identifikationsinformationen der ersten Ausgangsschaltung umfasst und die zweite Steueranweisung verwendet wird, um die erste Ausgangsschaltung zu aktivieren.

5. Elektronische Vorrichtung nach Anspruch 4, wobei die Steuerschaltung (101) ferner konfiguriert ist zum:

vor dem Senden der zweiten Steueranweisung an die N Ausgangsschaltungen, Bestimmen, dass gespeicherte Identifikationsinformationen die Identifikationsinformationen der ersten Ausgangsschaltung nicht umfassen; und
Speichern der Identifikationsinformationen der ersten Ausgangsschaltung.

6. Elektronische Vorrichtung nach einem der Ansprüche 1 bis 5, wobei die Konfigurationsregel Entsprechungen zwischen den M Ausgangsleitungsdrähten und M Hardwareadressbereichen umfasst; und
wobei die Steuerschaltung (101) speziell konfiguriert ist zum:

Erhalten eines Hardwareadressbereichs, der dem ersten Ausgangsleitungsdraht entspricht; und
Bestimmen der ersten Hardwareadresse aus nicht zugeordneten Hardwareadressen in dem Hardwareadressbereich.

7. Elektronische Vorrichtung nach einem der Ansprüche 1 bis 6, wobei die elektronische Vorrichtung ein Ladestapel ist, die elektronische Vorrichtung ferner einen Eingangsleitungsdraht umfasst und Eingangsanschlüsse der N Ausgangsschaltungen mit dem Eingangsleitungsdraht gekoppelt sind;

der Eingangsleitungsdraht konfiguriert ist, um:
mit einer Wechselstromversorgung gekoppelt zu werden; und einen Wechselstrom zu empfangen, der durch die Wechselstromversorgung bereitgestellt wird, und den Wechselstrom an die N Ausgangsschaltungen bereitzustellen; und

wobei die erste Ausgangsschaltung speziell konfiguriert ist zum:

Umwandeln des Wechselstroms, der von dem Eingangsleitungsdraht empfangen wird, in einen Gleichstrom und Ausgeben eines Ausgangssignals in einer Form eines Gleichstroms an den entsprechenden ersten Ausgangsleitungsdraht.

8. Elektronische Vorrichtung, umfassend: eine Steuerschaltung (101), N Ausgangsschaltungen, N Kopplerschaltungen und M Ausgangsleitungsdrähte, wobei sowohl M als auch N ganze Zahlen größer als 1 sind;

wobei Verbindungsbeziehungen zwischen den N Ausgangsschaltungen und den N Kopplerschaltungen derart voreingestellt sind, dass Eingangsanschlüsse der N Kopplerschaltungen jeweils mit Ausgangsanschlüssen der N Ausgangsschaltungen in einer Eins-zu-Eins-Entsprechung gekoppelt sind und jede Kopplerschaltung M Ausgangsanschlüsse beinhaltet, und die M Ausgangsanschlüsse jeder der N Kopplerschaltungen jeweils mit den M Ausgangsleitungsdrähten in einer Eins-zu-Eins-Entsprechung gekoppelt sind;

wobei Steueranschlüsse der N Ausgangsschaltungen parallel geschaltet sind und mit der Steuerschaltung (101) gekoppelt sind;

wobei Steueranschlüsse der N Kopplerschaltungen separat mit der Steuerschaltung (101) gekoppelt sind und die Steuerschaltung ferner mit einem der M Ausgangsleitungsdrähte gekoppelt ist, die als ein erfasster Leitungsdraht in den M Ausgangsleitungsdrähten verwendet werden; und

die Steuerschaltung (101) konfiguriert ist, um einen Hardwareadressenzuweisungsvorgang einmal oder mehrmals durchzuführen, wobei der Hardwareadressenzuweisungsvorgang umfasst:

Aktivieren (S301, S701) einer ersten Ausgangsschaltung, so dass die erste Ausgangsschaltung ein Ausgangssignal sendet, wobei die erste Ausgangsschaltung eine der N Ausgangsschaltungen ist, und wenn der Hardwareadressenzuweisungsvorgang mehrmals durchgeführt wird, jedes Mal eine unterschiedliche erste Ausgangsschaltung aktiviert wird;

sequentielles Steuern der N Kopplerschaltungen, um Übertragungswege zu dem erfassten Leitungsdraht zu leiten;

falls, nach dem Steuern einer ersten Kopplerschaltung, um einen Übertragungsweg zu dem erfassten Leitungsdraht zu leiten, ein erstes Ausgangssignal erfasst wird, das erzeugt wird, nachdem das Ausgangssignal durch den erfassten Leitungsdraht passiert, Konfigurieren einer ersten Hardwareadresse für die erste Ausgangsschaltung gemäß einer Konfigurationsregel, wobei die erste Hardwareadresse der ersten Kopplerschaltung entspricht; und

Senden der ersten Hardwareadresse an die erste Ausgangsschaltung, wobei

die erste Ausgangsschaltung ferner konfiguriert ist, um die erste Hardwareadresse zu speichern.

9. Elektronische Vorrichtung nach Anspruch 8, wobei die elektronische Vorrichtung ferner eine Erfassungsschaltung (104) umfasst, wobei ein Eingangsanschluss der Erfassungsschaltung (104) mit dem erfassten Leitungsdraht gekoppelt ist und ein Ausgangsanschluss der Erfassungsschaltung (104) mit der Steuerschaltung (101) gekoppelt ist; und

die Erfassungsschaltung (104) konfiguriert ist zum:

Empfangen des Ausgangssignals der ersten Ausgangsschaltung, Durchführen einer Spannungsteilungsverarbeitung an dem Ausgangssignal und Senden des ersten Ausgangssignals an die Steuerschaltung (101), wobei das erste Ausgangssignal ein Ausgangssignal ist, das nach der Spannungsteilungsverarbeitung erhalten wird.

10. Elektronische Vorrichtung nach Anspruch 8 oder 9, wobei

die Steuerschaltung (101) ferner konfiguriert ist zum:

Bestimmen einer oder mehrerer Zielkopplerschaltungen eines Zielausgangsleitungsdrahts, dessen Gesamtausgangssignal angepasst werden muss, wobei der Zielausgangsleitungsdraht einer der M Ausgangsleitungsdrähte ist;

Bestimmen, gemäß der Konfigurationsregel, einer oder mehrerer Hardwareadressen, die jeweils der einen oder den mehreren Zielkopplerschaltungen entsprechen; und

Senden einer dritten Steueranweisung an die N Ausgangsschaltungen, wobei die dritte Steueranweisung Steuerinformationen und die eine oder die mehreren Hardwareadressen umfasst; und/oder Senden einer vierten Steueranweisung an die eine oder die mehreren Zielkopplerschaltungen, wobei die vierte Steueranweisung verwendet wird, um die Zielkopplerschaltung anzuweisen, einen Übertragungsweg eines Ausgangssignals zu dem anzupassenden Zielausgangsleitungsdraht zu trennen oder zu leiten; und

die erste Ausgangsschaltung ferner konfiguriert ist zum:

Empfangen der dritten Steueranweisung; und

falls die eine oder die mehreren Hardwareadressen die erste Hardwareadresse umfassen, Ausführen der Steuerinformationen.

11. Elektronische Vorrichtung nach einem der Ansprüche 8 bis 10, wobei die erste Ausgangsschaltung ferner konfiguriert ist zum:

Senden von Identifikationsinformationen der ersten Ausgangsschaltung an die Steuerschaltung (101); und
wobei die Steuerschaltung (101) speziell konfiguriert ist zum:
Senden einer zweiten Steueranweisung an die N Ausgangsschaltungen, wobei die zweite Steueranweisung die Identifikationsinformationen der ersten Ausgangsschaltung umfasst und die zweite Steueranweisung verwendet wird, um die erste Ausgangsschaltung zu aktivieren.

12. Elektronische Vorrichtung nach Anspruch 11, wobei die Steuerschaltung (101) ferner konfiguriert ist zum:

vor dem Senden der zweiten Steueranweisung an die N Ausgangsschaltungen, Bestimmen, dass gespeicherte Identifikationsinformationen die Identifikationsinformationen der ersten Ausgangsschaltung nicht umfassen; und
Speichern der Identifikationsinformationen der ersten Ausgangsschaltung.

13. Elektronische Vorrichtung nach einem der Ansprüche 8 bis 12, wobei die Konfigurationsregel umfasst, dass die Hardwareadresse der ersten Ausgangsschaltung Identifikationsinformationen der ersten Kopplerschaltung ist.

14. Elektronische Vorrichtung nach einem der Ansprüche 8 bis 13, wobei die elektronische Vorrichtung ein Ladestapel ist, die elektronische Vorrichtung ferner einen Eingangsleitungsdraht umfasst und Eingangsanschlüsse der N Ausgangsschaltungen mit dem Eingangsleitungsdraht gekoppelt sind;

der Eingangsleitungsdraht konfiguriert ist, um:
mit einer Wechselstromversorgung gekoppelt zu werden; und einen Wechselstrom zu empfangen, der durch die Wechselstromversorgung bereitgestellt wird, und den Wechselstrom an die N Ausgangsschaltungen bereitzustellen; und
wobei die erste Ausgangsschaltung speziell konfiguriert ist zum:
Umwandeln des Wechselstroms, der von dem Eingangsleitungsdraht empfangen wird, in einen Gleichstrom und Ausgeben eines Ausgangssignals in einer Form eines Gleichstroms an die entsprechende erste Kopplerschaltung.

15. Hardwareadressenkonfigurationsverfahren für eine elektronische Vorrichtung, umfassend eine Steuerschaltung, N Ausgangsschaltungen und M Ausgangsleitungsdrähte, wobei sowohl M als auch N ganze Zahlen größer als 1 sind, wobei Verbindungsbeziehungen zwischen den N Ausgangsschaltungen und den M Ausgangsleitungsdrähten voreingestellt sind, Steueranschlüsse der N Ausgangsschaltungen parallel geschaltet sind und mit der Steuerschaltung (101) gekoppelt sind, wobei die Steuerschaltung (101) M Erfassungsports umfasst und die M Erfassungsports jeweils mit den M Ausgangsleitungsdrähten in einer Eins-zu-Eins-Übereinstimmung verbunden sind, wobei die Steuerschaltung einen Hardwareadressenzuweisungsvorgang einmal oder mehrmals durchführt, wobei der Hardwareadressenzuweisungsvorgang umfasst:

Aktivieren (S301, S701) einer ersten Ausgangsschaltung, so dass die erste Ausgangsschaltung ein Ausgangssignal sendet, wobei die erste Ausgangsschaltung eine der N Ausgangsschaltungen ist, und wenn der Hardwareadressenzuweisungsvorgang mehrmals durchgeführt wird, jedes Mal eine unterschiedliche erste Ausgangsschaltung aktiviert wird;
bei einem Erfassen, unter Verwendung eines ersten Erfassungsports, eines ersten Ausgangssignals, das erzeugt wird, nachdem das Ausgangssignal durch einen ersten Ausgangsleitungsdraht passiert, Konfigurieren (S303) einer ersten Hardwareadresse für die erste Ausgangsschaltung gemäß einer Konfigurationsregel, wobei die erste Hardwareadresse dem ersten Ausgangsleitungsdraht entspricht, der erste Erfassungsport einer der M Erfassungsports ist und der erste Ausgangsleitungsdraht ein Ausgangsleitungsdraht ist, der mit dem ersten Erfassungsport gekoppelt ist;
Senden der ersten Hardwareadresse an die erste Ausgangsschaltung; und
Speichern, durch die erste Ausgangsschaltung, der ersten Hardwareadresse.

16. Verfahren nach Anspruch 15, wobei nach dem Senden der ersten Hardwareadresse an die erste Ausgangsschaltung das Verfahren ferner umfasst:

Bestimmen, gemäß der Konfigurationsrolle, einer oder mehrerer Zielhardwareadressen, die einem Zielausgangsleitungsdraht entsprechen, dessen Gesamtausgangssignal angepasst werden muss, wobei der Zielausgangsleitungsdraht einer der M Ausgangsleitungsdrähte ist; und

Senden einer ersten Steueranweisung an die N Ausgangsschaltungen, wobei die erste Steueranweisung Steuerinformationen und die eine oder die mehreren Zielhardwareadressen umfasst und die erste Steueranweisung verwendet wird, um eine oder mehrere Ausgangsschaltungen anzuweisen, die jeweils der einen oder den mehreren Zielhardwareadressen entsprechen, die Steuerinformationen auszuführen.

17. Verfahren nach Anspruch 15 oder 16, wobei das Aktivieren einer ersten Ausgangsschaltung umfasst:

Senden einer zweiten Steueranweisung an die N Ausgangsschaltungen, wobei die zweite Steueranweisung Identifikationsinformationen der ersten Ausgangsschaltung umfasst und die zweite Steueranweisung verwendet wird, um die erste Ausgangsschaltung zu aktivieren.

18. Verfahren nach Anspruch 17, wobei vor dem Aktivieren einer ersten Ausgangsschaltung das Verfahren ferner umfasst:

Bestimmen, dass gespeicherte Identifikationsinformationen die Identifikationsinformationen der ersten Ausgangsschaltung nicht umfassen; und
Speichern der Identifikationsinformationen der ersten Ausgangsschaltung.

19. Verfahren nach einem der Ansprüche 15 bis 18, wobei die Konfigurationsregel Entsprechungen zwischen den M Ausgangsleitungsdrähten und M Hardwareadressbereichen umfasst und die M Hardwareadressbereiche sich nicht überlappen; und
das Konfigurieren einer ersten Hardwareadresse für die erste Ausgangsschaltung gemäß einer Konfigurationsregel umfasst:

Erhalten eines Hardwareadressbereichs, der dem ersten Ausgangsleitungsdraht entspricht; und
Bestimmen der ersten Hardwareadresse aus nicht zugeordneten Hardwareadressen im Hardwareadressbereich.

20. Hardwareadressenkonfigurationsverfahren für eine elektronische Vorrichtung, umfassend eine Steuerschaltung (101), N Ausgangsschaltungen, N Kopplerschaltungen und M Ausgangsleitungsdrähte, wobei sowohl M als auch N ganze Zahlen größer als 1 sind, wobei Verbindungsbeziehungen zwischen den N Ausgangsschaltungen und den N Kopplerschaltungen derart voreingestellt sind, dass Eingangsanschlüsse der N Kopplerschaltungen jeweils mit Ausgangsanschlüssen der N Ausgangsschaltungen in einer Eins-zu-Eins-Entsprechung gekoppelt sind und jede Kopplerschaltung M Ausgangsanschlüsse beinhaltet, und die M Ausgangsanschlüsse jeder der N Kopplerschaltungen jeweils mit den M Ausgangsleitungsdrähten in einer Eins-zu-Eins-Entsprechung gekoppelt sind, wobei Steueranschlüsse der N Ausgangsschaltungen parallel geschaltet sind und mit der Steuerschaltung (101) gekoppelt sind, wobei Steueranschlüsse der N Kopplerschaltungen separat mit der Steuerschaltung (101) gekoppelt sind und die Steuerschaltung ferner mit einem der M Ausgangsleitungsdrähte gekoppelt ist, die als ein erfasster Leitungsdraht in den M Ausgangsleitungsdrähten verwendet werden, und die Steuerschaltung (101) einen Hardwareadressenzuweisungsvorgang einmal oder mehrmals durchführt, wobei der Hardwareadressenzuweisungsvorgang umfasst:

Aktivieren (S301) einer ersten Ausgangsschaltung, so dass die erste Ausgangsschaltung ein Ausgangssignal sendet, wobei die erste Ausgangsschaltung eine von N Ausgangsschaltungen ist, und wenn der Hardwareadressenzuweisungsvorgang mehrmals durchgeführt wird, jedes Mal eine unterschiedliche erste Ausgangsschaltung aktiviert wird;
sequentielles Steuern der N Kopplerschaltungen, um Übertragungswege zu einem der M Ausgangsleitungsdrähte zu leiten, die als ein erfasster Leitungsdraht verwendet werden;
falls, nach dem Steuern einer ersten Kopplerschaltung, um einen Übertragungsweg zu dem erfassten Leitungsdraht zu leiten, ein erstes Ausgangssignal erfasst wird, das erzeugt wird, nachdem das Ausgangssignal durch den erfassten Leitungsdraht passiert, Konfigurieren (S304, S704) einer ersten Hardwareadresse für die erste Ausgangsschaltung gemäß einer Konfigurationsregel, wobei die erste Hardwareadresse der ersten Kopplerschaltung entspricht;
Senden der ersten Hardwareadresse an die erste Ausgangsschaltung; und
Speichern, durch die erste Ausgangsschaltung, der ersten Hardwareadresse.

21. Verfahren nach Anspruch 20, wobei nach dem Senden der ersten Hardwareadresse an die erste Ausgangsschaltung das Verfahren ferner umfasst:

Bestimmen einer oder mehrerer Zielkopplerschaltungen eines Zielausgangsleitungsdrahts, dessen Gesamtausgangssignal angepasst werden muss, wobei der Zielausgangsleitungsdraht einer der M Ausgangsleitungsdrähte ist;
Bestimmen, gemäß der Konfigurationsregel, einer oder mehrerer Hardwareadressen, die jeweils der einen oder den mehreren Zielkopplerschaltungen entsprechen; und
Senden einer dritten Steueranweisung an die N Ausgangsschaltungen, wobei die dritte Steueranweisung Steuerinformationen und die eine oder die mehreren Hardwareadressen umfasst und die dritte Steueranweisung verwendet wird, um eine oder mehrere Ausgangsschaltungen anzuweisen, die jeweils der einen oder den mehreren Hardwareadressen entsprechen, die Steuerinformationen auszuführen; und/oder Senden einer vierten Steueranweisung an die eine oder die mehreren Zielkopplerschaltungen, wobei die vierte Steueranweisung verwendet wird, um die Zielkopplerschaltung anzuweisen, einen Übertragungsweg eines Ausgangssignals zu dem anzupassenden Zielausgangsleitungsdraht zu trennen oder zu leiten.

22. Verfahren nach Anspruch 20 oder 21, wobei das Aktivieren einer ersten Ausgangsschaltung umfasst:
Senden einer zweiten Steueranweisung an die N Ausgangsschaltungen, wobei die zweite Steueranweisung Identifikationsinformationen der ersten Ausgangsschaltung umfasst und die zweite Steueranweisung verwendet wird, um die erste Ausgangsschaltung zu aktivieren.

23. Verfahren nach Anspruch 22, wobei vor dem Senden einer zweiten Steueranweisung an die N Ausgangsschaltungen das Verfahren ferner umfasst:

Bestimmen, dass gespeicherte Identifikationsinformationen die Identifikationsinformationen der ersten Ausgangsschaltung nicht umfassen; und
Speichern der Identifikationsinformationen der ersten Ausgangsschaltung.

24. Verfahren nach einem der Ansprüche 20 bis 23, wobei die Konfigurationsregel umfasst, dass die Hardwareadresse der ersten Ausgangsschaltung Identifikationsinformationen der ersten Kopplerschaltung ist.

**Revendications**

1. Dispositif électronique, comprenant : un circuit de commande (101), N circuits de sortie et M fils conducteurs de sortie, dans lequel M et N sont tous deux des nombres entiers supérieurs à 1 ;

les relations de connexion entre les N circuits de sortie et les M fils conducteurs de sortie sont prédéfinies ;
les bornes de commande des N circuits de sortie sont connectées en parallèle et sont couplées au circuit de commande (101) ;
le circuit de commande (101) comprend M ports de détection, et les M ports de détection sont respectivement couplés aux M fils conducteurs de sortie dans une correspondance biunivoque ; et
le circuit de commande (101) est conçu pour effectuer une ou plusieurs fois une opération d'attribution d'adresse matérielle, dans lequel l'opération d'attribution d'adresse matérielle comprend :

l'activation (S301, S701) d'un premier circuit de sortie, de sorte que le premier circuit de sortie envoie un signal de sortie, dans lequel le premier circuit de sortie est l'un des N circuits de sortie, et lorsque l'opération d'attribution d'adresse matérielle est effectuée plusieurs fois, un premier circuit de sortie différent est activé à chaque fois ;
lors de la détection, à l'aide d'un premier port de détection, d'un premier signal de sortie généré après le passage du signal de sortie à travers un premier fil conducteur de sortie, la détermination (S303) d'une première adresse matérielle du premier circuit de sortie selon une règle de configuration, dans lequel la première adresse matérielle correspond au premier fil conducteur de sortie, le premier port de détection est l'un des M ports de détection, et le premier fil conducteur de sortie est un fil conducteur de sortie couplé au premier port de détection ; et
l'envoi de la première adresse matérielle au premier circuit de sortie, dans lequel
le premier circuit de sortie est en outre conçu pour stocker la première adresse matérielle.

2. Dispositif électronique selon la revendication 1, dans lequel le dispositif électronique comprend en outre un circuit de détection (104), et le circuit de détection (104) comprend M bornes d'entrée et M bornes de sortie qui sont dans une correspondance biunivoque, les M bornes du circuit de détection (104) sont respectivement couplées aux M fils conducteurs de sortie, et les M bornes de sortie du circuit de détection (104) sont respectivement couplées aux M ports de détection du circuit de commande (101) ; et
le circuit de détection (104) est conçu pour :
recevoir le signal de sortie du premier circuit de sortie à l'aide d'une première borne d'entrée couplée au premier fil conducteur de sortie, effectuer un traitement de division de tension sur le signal de sortie et envoyer le premier signal de sortie au circuit de commande (101) à l'aide d'une première borne de sortie correspondant à la première borne d'entrée, dans lequel la première borne d'entrée est l'une des M bornes d'entrée, la première borne de sortie est l'une des M bornes de sortie et le premier signal de sortie est un signal de sortie obtenu après le traitement de division de tension.

**3.** Dispositif électronique selon la revendication 1 ou 2, dans lequel le circuit de commande (101) est en outre conçu pour :

déterminer, selon la règle de configuration, une ou plusieurs adresses matérielles cibles correspondant à un fil conducteur de sortie cible dont le signal de sortie total doit être réglé, dans lequel le fil conducteur de sortie cible est l'un des M fils conducteurs de sortie ; et
envoyer une première instruction de commande aux N circuits de sortie, dans lequel la première instruction de commande comprend des informations de commande et la ou les adresses matérielles cibles ; et
le premier circuit de sortie est en outre conçu pour :

recevoir la première instruction de commande ; et
si la ou les adresses matérielles cibles comprennent la première adresse matérielle, exécuter les informations de commande.

**4.** Dispositif électronique selon l'une quelconque des revendications 1 à 3, dans lequel le premier circuit de sortie est en outre conçu pour :

envoyer des informations d'identification du premier circuit de sortie au circuit de commande (101) ; et
le circuit de commande (101) est spécifiquement conçu pour :
envoyer une deuxième instruction de commande aux N circuits de sortie, dans lequel la deuxième instruction de commande comprend les informations d'identification du premier circuit de sortie, et la deuxième instruction de commande est utilisée pour activer le premier circuit de sortie.

**5.** Dispositif électronique selon la revendication 4, dans lequel le circuit de commande (101) est en outre conçu pour :

avant d'envoyer la deuxième instruction de commande aux N circuits de sortie, déterminer que les informations d'identification stockées ne comprennent pas les informations d'identification du premier circuit de sortie ; et
stocker les informations d'identification du premier circuit de sortie.

**6.** Dispositif électronique selon l'une quelconque des revendications 1 à 5, dans lequel la règle de configuration comprend des correspondances entre les M fils conducteurs de sortie et M plages d'adresses matérielles ; et
le circuit de commande (101) est spécifiquement conçu pour :

obtenir une plage d'adresses matérielles correspondant au premier fil conducteur de sortie ; et
déterminer la première adresse matérielle à partir d'adresses matérielles non attribuées dans la plage d'adresses matérielles.

**7.** Dispositif électronique selon l'une quelconque des revendications 1 à 6, dans lequel le dispositif électronique est une pile de charge, le dispositif électronique comprend en outre un fil conducteur d'entrée, et des bornes d'entrée des N circuits de sortie sont couplées au fil conducteur d'entrée ;

le fil conducteur d'entrée est conçu pour : être couplé à une alimentation en courant alternatif ; et recevoir un courant alternatif fourni par l'alimentation en courant alternatif, et fournir le courant alternatif aux N circuits de sortie ; et
le premier circuit de sortie est spécifiquement conçu pour :
convertir le courant alternatif reçu du fil conducteur d'entrée en un courant continu, et délivrer un signal de sortie sous la forme d'un courant continu au premier fil conducteur de sortie correspondant.

**8.** Dispositif électronique, comprenant : un circuit de commande (101), N circuits de sortie, N circuits de commutation et M fils conducteurs de sortie, dans lequel M et N sont tous deux des nombres entiers supérieurs à 1 ;

les relations de connexion entre les N circuits de sortie et les N circuits de commutation sont prédéfinies de sorte que les bornes d'entrée des N circuits de commutation sont respectivement couplées aux bornes de sortie des N circuits de sortie dans une correspondance biunivoque, et chaque circuit de commutation comporte M bornes de sortie, et les M bornes de sortie de chacun des N circuits de commutation sont respectivement couplées aux M fils conducteurs de sortie dans une correspondance biunivoque ;
les bornes de commande des N circuits de sortie sont connectées en parallèle et sont couplées au circuit de commande (101) ;
des bornes de commande des N circuits de commutation sont couplées séparément au circuit de commande (101) et le circuit de commande est en outre couplé à l'un des M fils conducteurs de sortie utilisés comme fil conducteur détecté dans les M fils conducteurs de sortie ; et

le circuit de commande (101) est conçu pour effectuer une ou plusieurs fois une opération d'attribution d'adresse matérielle, dans lequel l'opération d'attribution d'adresse matérielle comprend :

l'activation (S301, S701) d'un premier circuit de sortie, de sorte que le premier circuit de sortie envoie un signal de sortie, dans lequel le premier circuit de sortie est l'un des N circuits de sortie, et lorsque l'opération d'attribution d'adresse matérielle est effectuée plusieurs fois, un premier circuit de sortie différent est activé à chaque fois ;
la commande séquentielle des N circuits de commutation pour conduire des voies de transmission vers le fil conducteur détecté ;
en cas de détection, après avoir commandé un premier circuit de commutation pour conduire une voie de transmission vers le fil conducteur détecté, d'un premier signal de sortie généré après le passage du signal de sortie à travers le fil conducteur détecté, la configuration d'une première adresse matérielle pour le premier circuit de sortie selon une règle de configuration, dans lequel la première adresse matérielle correspond au premier circuit de commutation ; et
l'envoi de la première adresse matérielle au premier circuit de sortie, dans lequel le premier circuit de sortie est en outre conçu pour stocker la première adresse matérielle.

9. Dispositif électronique selon la revendication 8, dans lequel le dispositif électronique comprend en outre un circuit de détection (104), une borne d'entrée du circuit de détection (104) est couplée au fil conducteur détecté, et une borne de sortie du circuit de détection (104) est couplée au circuit de commande (101) ; et
le circuit de détection (104) est conçu pour :
recevoir le signal de sortie du premier circuit de sortie, effectuer un traitement de division de tension sur le signal de sortie et envoyer le premier signal de sortie au circuit de commande (101), dans lequel le premier signal de sortie est un signal de sortie obtenu après le traitement de division de tension.

10. Dispositif électronique selon la revendication 8 ou 9, dans lequel le circuit de commande (101) est en outre conçu pour :

déterminer un ou plusieurs circuits de commutation cibles d'un fil conducteur de sortie cible dont le signal de sortie total doit être réglé, dans lequel le fil conducteur de sortie cible est l'un des M fils conducteurs de sortie ;

déterminer, selon la règle de configuration, une ou plusieurs adresses matérielles correspondant respectivement au ou aux circuits de commutation cibles ; et
envoyer une troisième instruction de commande aux N circuits de sortie, dans lequel la troisième instruction de commande comprend des informations de commande et la ou les adresses matérielles ; et/ou envoyer une quatrième instruction de commande au ou aux circuits de commutation cibles, dans lequel la quatrième instruction de commande est utilisée pour demander au circuit de commutation cible de déconnecter ou de conduire une voie de transmission d'un signal de sortie vers le fil conducteur de sortie cible à régler ; et
le premier circuit de sortie est en outre conçu pour :

recevoir la troisième instruction de commande ; et
si la ou les adresses matérielles comprennent la première adresse matérielle, exécuter les informations de commande.

11. Dispositif électronique selon l'une quelconque des revendications 8 à 10, dans lequel le premier circuit de sortie est en outre conçu pour :

envoyer des informations d'identification du premier circuit de sortie au circuit de commande (101) ; et
le circuit de commande (101) est spécifiquement conçu pour :
envoyer une deuxième instruction de commande aux N circuits de sortie, dans lequel la deuxième instruction de commande comprend les informations d'identification du premier circuit de sortie, et la deuxième instruction de commande est utilisée pour activer le premier circuit de sortie.

12. Dispositif électronique selon la revendication 11, dans lequel le circuit de commande (101) est en outre conçu pour :

avant d'envoyer la deuxième instruction de commande aux N circuits de sortie, déterminer que les informations d'identification stockées ne comprennent pas les informations d'identification du premier circuit de sortie ; et
stocker les informations d'identification du premier circuit de sortie.

13. Dispositif électronique selon l'une quelconque des revendications 8 à 12, dans lequel la règle de configuration comprend le fait que l'adresse matérielle du premier circuit de sortie est une information d'identification du premier circuit de commutation.

14. Dispositif électronique selon l'une quelconque des revendications 8 à 13, dans lequel le dispositif électronique est une pile de charge, le dispositif électronique comprend en outre un fil conducteur d'entrée, et les bornes d'entrée des N circuits de sortie sont couplées au fil conducteur d'entrée ;

le fil conducteur d'entrée est conçu pour : être couplé à une alimentation en courant alternatif ; et recevoir un courant alternatif fourni par l'alimentation en courant alternatif, et fournir le courant alternatif aux N circuits de sortie ; et

le premier circuit de sortie est spécifiquement conçu pour :

convertir le courant alternatif reçu du fil conducteur d'entrée en un courant continu, et délivrer un signal de sortie sous la forme d'un courant continu au premier circuit de commutation correspondant.

15. Procédé de configuration d'adresse matérielle pour un dispositif électronique comprenant un circuit de commande, N circuits de sortie et M fils conducteurs de sortie, dans lequel M et N sont tous deux des nombres entiers supérieurs à 1, les relations de connexion entre les N circuits de sortie et les M fils conducteurs de sortie sont prédéfinies, les bornes de commande des N circuits de sortie sont connectées en parallèle et sont couplées au circuit de commande (101), le circuit de commande (101) comprend M ports de détection, et les M ports de détection sont respectivement couplés aux M fils conducteurs de sortie dans une correspondance biunivoque, le circuit de commande effectuant une ou plusieurs fois une opération d'attribution d'adresses matérielles, dans lequel l'opération d'attribution d'adresses matérielles comprend :

l'activation (S301, S701) d'un premier circuit de sortie, de sorte que le premier circuit de sortie envoie un signal de sortie, dans lequel le premier circuit de sortie est l'un des N circuits de sortie, et lorsque l'opération d'attribution d'adresse matérielle est effectuée plusieurs fois, un premier circuit de sortie différent est activé à chaque fois ;

lors de la détection, à l'aide d'un premier port de détection, d'un premier signal de sortie généré après le passage du signal de sortie à travers un premier fil conducteur de sortie, la configuration (S303) d'une première adresse matérielle pour le premier circuit de sortie selon une règle de configuration, dans lequel la première adresse matérielle correspond au premier fil conducteur de sortie, le premier port de détection est l'un des M ports de détection, et le premier fil conducteur de sortie est un fil conducteur de sortie couplé au premier port de détection ;

l'envoi de la première adresse matérielle au premier circuit de sortie ; et

le stockage, par le premier circuit de sortie, de la première adresse matérielle.

16. Procédé selon la revendication 15, dans lequel le procédé comprend en outre après l'envoi de la première adresse matérielle au premier circuit de sortie :

la détermination, selon la règle de configuration, d'une ou de plusieurs adresses matérielles cibles correspondant à un fil conducteur de sortie cible dont le signal de sortie total doit être réglé, dans lequel le fil conducteur de sortie cible est l'un des M fils conducteurs de sortie ; et

l'envoi d'une première instruction de commande aux N circuits de sortie, dans lequel la première instruction de commande comprend des informations de commande et la ou les adresses matérielles cibles, et la première instruction de commande est utilisée pour demander à un ou plusieurs circuits de sortie correspondant respectivement à la ou aux adresses matérielles cibles pour exécuter les informations de commande.

17. Procédé selon la revendication 15 ou 16, dans lequel l'activation d'un premier circuit de sortie comprend : l'envoi d'une deuxième instruction de commande aux N circuits de sortie, dans lequel la deuxième instruction de commande comprend des informations d'identification du premier circuit de sortie, et la deuxième instruction de commande est utilisée pour activer le premier circuit de sortie.

18. Procédé selon la revendication 17, dans lequel le procédé comprend en outre avant l'activation d'un premier circuit de sortie :

la détermination du fait que les informations d'identification stockées ne comprennent pas les informations d'identification du premier circuit de sortie ; et

le stockage des informations d'identification du premier circuit de sortie.

19. Procédé selon l'une quelconque des revendications 15 à 18, dans lequel la règle de configuration comprend des correspondances entre les M fils conducteurs de sortie et M plages d'adresses matérielles, et les M plages d'adresses matérielles ne se chevauchent pas ; et

la configuration d'une première adresse matérielle pour le premier circuit de sortie selon une règle de configuration comprend :

l'obtention d'une plage d'adresses matérielles correspondant au premier fil conducteur de sortie ; et

la détermination de la première adresse matérielle à partir d'adresses matérielles non attribuées dans la plage d'adresses matérielles.

20. Procédé de configuration d'adresse matérielle pour un dispositif électronique, comprenant un circuit de commande (101), N circuits de sortie, N circuits de commutation et M fils conducteurs de sortie, dans lequel M et N sont tous deux des nombres entiers supérieurs à 1, les relations de connexion entre les N circuits de sortie et les N circuits de commutation sont prédéfinies de sorte que les bornes d'entrée des N circuits de commutation sont respectivement couplées aux bornes de sortie des N circuits de sortie dans une correspondance biunivoque, et chaque circuit de commutation comporte M bornes de sortie, et les M bornes de sortie de chacun des N circuits de commutation sont respectivement couplées aux M fils conducteurs de sortie dans une correspondance biunivoque, les bornes de commande des N circuits de sortie sont connectées en parallèle et sont couplées au circuit de commande (101), les bornes de commande des N circuits de commutation sont couplées séparément au circuit de commande (101) et le circuit de commande est en outre couplé à l'un des M fils conducteurs de sortie utilisés comme fil conducteur détecté dans les M fils conducteurs de sortie, et le circuit de commande (101) effectue une ou plusieurs fois une opération d'attribution d'adresses matérielles, dans lequel l'opération d'attribution d'adresses matérielles comprend :

l'activation (S301) d'un premier circuit de sortie, de sorte que le premier circuit de sortie envoie un signal de sortie, dans lequel le premier circuit de sortie est l'un de N circuits de sortie, et lorsque l'opération d'attribution d'adresse matérielle est effectuée plusieurs fois, un premier circuit de sortie différent est activé à chaque fois ;

la commande séquentielle des N circuits de commutation pour conduire des voies de transmission vers l'un des M fils conducteurs de sortie utilisés comme fil conducteur détecté ;

en cas de détection, après avoir commandé un premier circuit de commutation pour conduire une voie de transmission vers le fil conducteur détecté, d'un premier signal de sortie généré après le passage du signal de sortie à travers le fil conducteur détecté, la configuration (S304, S704) d'une première adresse matérielle pour le premier circuit de sortie selon une règle de configuration, dans lequel la première adresse matérielle correspond au premier circuit de commutation ;

l'envoi de la première adresse matérielle au premier circuit de sortie ; et

le stockage, par le premier circuit de sortie, de la première adresse matérielle.

21. Procédé selon la revendication 20, dans lequel le procédé comprend en outre après l'envoi de la première adresse matérielle au premier circuit de sortie :

la détermination d'un ou de plusieurs circuits de commutation cibles d'un fil conducteur de sortie cible dont le signal de sortie total doit être réglé, dans lequel le fil conducteur de sortie cible est l'un des M fils conducteurs de sortie ;

la détermination, selon la règle de configuration, d'une ou de plusieurs adresses matérielles correspondant respectivement au ou aux circuits de commutation cibles ; et

l'envoi d'une troisième instruction de commande aux N circuits de sortie, dans lequel la troisième instruction de commande comprend des informations de commande et la ou les adresses matérielles, et la troisième instruction de commande est utilisée pour demander à un ou plusieurs circuits de sortie correspondant respectivement à la ou aux adresses matérielles pour exécuter les informations de commande ; et/ou

l'envoi d'une quatrième instruction de commande au ou aux circuits de commutation cibles, dans lequel la quatrième instruction de commande est utilisée pour demander au circuit de commutation cible de déconnecter ou de conduire une voie de transmission d'un signal de sortie vers le fil conducteur de sortie cible à régler.

22. Procédé selon la revendication 20 ou 21, dans lequel l'activation d'un premier circuit de sortie comprend : l'envoi d'une deuxième instruction de commande aux N circuits de sortie, dans lequel la deuxième instruction de commande comprend des informations d'identification du premier circuit de sortie, et la deuxième instruction de commande est utilisée pour activer le premier circuit de sortie.

23. Procédé selon la revendication 22, dans lequel le procédé comprend en outre avant l'envoi d'une deuxième instruction de commande aux N circuits de sortie :

la détermination du fait que les informations d'identification stockées ne comprennent pas les informations d'identification du premier circuit de sortie ; et

le stockage des informations d'identification du premier circuit de sortie.

24. Procédé selon l'une quelconque des revendications 20 à 23, dans lequel la règle de configuration comprend le fait que l'adresse matérielle du premier circuit de sortie est une information d'identification du premier circuit de commutation.

FIG. 1

On
Off

1     0     0     1     0     1     0     0

FIG. 2

| | |
|---|---|
| A control circuit enables an output circuit i | S301 |
| The control circuit determines an output conducting wire j corresponding to the output circuit i | S302 |
| The control circuit allocates a hardware address corresponding to the output conducting wire j to the output circuit i according to a configuration rule | S303 |
| The control circuit sends configuration information to the output circuit i, where the configuration information is used to indicate the hardware address allocated to the output circuit i | S304 |

FIG. 3

FIG. 4

FIG. 5

FIG. 6

S701

A control circuit enables an output circuit i

S702

The control circuit determines a switch circuit Ki corresponding to the output circuit i

S703

Allocate a hardware address corresponding to the switch circuit Ki to the output circuit i according to a configuration rule

S704

Send configuration information to the output circuit i, where the configuration information is used to indicate the hardware address allocated to the output circuit i

FIG. 7

Output module i

Memory ← Receiver

102

Control circuit 101

Switch circuit Ki

Detection circuit 104

Output conducting wire 1

Output conducting wire 2

...

Output conducting wire M

FIG. 8

S901 — Start identification

S902 — Enable an output circuit corresponding to a $k^{th}$ production sequence number, where k=1

S903 — Enable a switch circuit whose sequence number is m, where m=1

S904 — A control circuit detects a total output signal of a detected connecting wire

S906 — Enable a next switch circuit, where m=m+1

S905 — Whether a voltage value of the total output signal is greater than a voltage threshold

No

Yes

S907 — Disable the output circuit corresponding to the $k^{th}$ production sequence number, and allocate a hardware address to the output circuit corresponding to the $k^{th}$ production sequence number

S908 — Detect a total output signal of the detected connecting wire

S909 — Whether a voltage value of the total output signal is less than the preset threshold

No

Yes

S910 — k>N

S911 — Update the circuit, where k=k+1

S912 — Enable an output circuit corresponding to a $k^{th}$ production sequence number

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910900517
- US 6427807 B1